# EUROPEAN PATENT APPLICATION

(11) **EP 4 293 805 A1**
(43) Date of publication of application: **20.12.2023**
(21) Application number: 22752332.1
(22) Date of filing: 10.02.2022
(51) Int. Cl.: H01M 50/247, B25F 5/00

(54) **BATTERY PACK, EXTERNAL DEVICE, AND ELECTRICAL COMBINATION**

(30) Priority: 10.02.2021 CN 202110183952
(71) Applicant: Positec Power Tools (Suzhou) Co., Ltd., Suzhou, Jiangsu 215123 (CN)
(72) Inventor: WANG, Liangjun, Suzhou, Jiangsu 215123 (CN); CESTONARO, Igor·Andrea, Suzhou, Jiangsu 215123 (CN); LOU, Weidong, Suzhou, Jiangsu 215123 (CN); JIANG, Kun, Suzhou, Jiangsu 215123 (CN); WU, Jie, Suzhou, Jiangsu 215123 (CN)
(74) Representative: Dentons UK and Middle East LLP
(86) International application number: PCT/CN2022/075844
(87) International publication number: WO 2022/171172

(57) **Abstract**

The present disclosure relates to a battery pack, which can be fitted to an electrical device, including: a housing, having a top and a bottom arranged opposite to each other and a first side portion and a second side portion arranged opposite to each other; a plurality of cells electrically connected to each other, being accommodated in the housing; a sliding slot, used for guiding the battery pack to achieve mechanical connection with the electrical device; and a locking portion, used for achieving locking between the battery pack and the electrical device, where the top includes a top plane and a top recess under the top plane in the height direction, the top recess includes the sliding slot and the locking portion, and the sliding slot is recessed downward from the top plane in the height direction, and the first side portion, the second side portion, and the sliding slot all extend in the longitudinal direction of the battery pack. Thus, the battery pack has a compact structure and small size and is comfortable to hold, facilitating a user to use and carry. In addition, there are an external device interface, an external device, and an electrical combination provided.

## Description

The present application claims the priority of Chinese Patent Application No. 202110183952.1 filed on February 10, 2021, the entire content of which is incorporated herein by reference.

### BACKGROUND

### Technical Field

The present disclosure relates to a battery pack, an external device, and an electrical combination.

### Related Art

Battery packs have been always widely used as a portable and reusable energy source in a variety of fields such as power tools and household appliances.

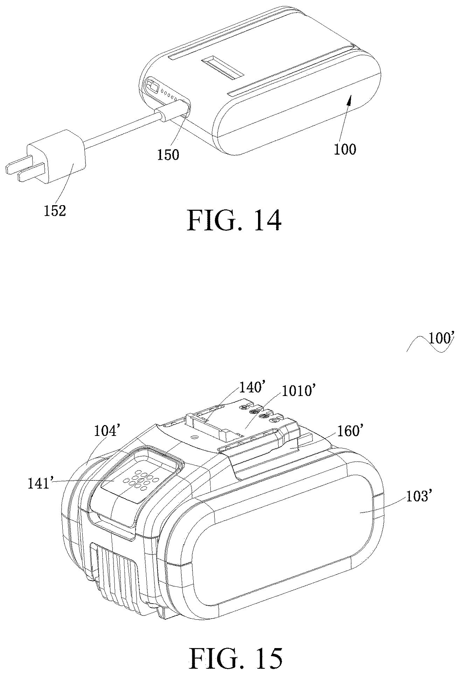

FIG. 15 illustrates the form of a battery pack 100' for power tools common in the prior art. A locking portion 140' in the battery pack 100' protrudes out of a top plane 1010'. The locking portion 140' is provided as a locking projection. The battery pack 100' further includes an unlocking member 141' controlling the locking portion 140' to move between a locked position and an unlocked position, and a sliding slot 160' is directly exposed to the outside. The battery pack 100' is irregularly shaped, and it is easy for a user to touch the protruding locking portion 140' when holding the battery pack, so the user cannot hold the battery pack comfortably and consequently it is inconvenient for the user to carry and use the battery pack.

Therefore, it is necessary to improve the prior art.

### SUMMARY

In order to overcome the defects in the prior art, the present disclosure provides a battery pack which is comfortable to hold and convenient to use and carry.

The technical solution used by the present disclosure for solving the problems in the prior art is:
a battery pack, being configured for engaging to an external device, including: a housing, having a top portion and a bottom portion arranged opposite to each other and a first side portion and a second side portion arranged opposite to each other; a plurality of cells electrically connected to each other, being accommodated in the housing; a sliding slot, including a first sliding slot and a second sliding slot, configured for guiding the battery pack to achieve mechanical connection with the external device; and a locking portion, used for achieving locking between the battery pack and the external device, where the top includes a top plane and a top recess under the top plane in the height direction, the top recess includes the sliding slot and the locking portion, and the sliding slot is recessed downward from the top plane in the height direction, and the first side portion, the second side portion, and the sliding slot all extend in the longitudinal direction of the battery pack.

According to the battery pack provided by the present disclosure, the sliding slot and the locking portion are provided as the top recess under the top plane in the height direction, the top of the battery pack is basically free of projections, the size can be reduced in the height direction, the structure is more compact, and the shape of the battery pack is smooth and flat, so that the user can hold the battery pack comfortably, facilitating use and carry.

Optionally, the top plane comprises a first planar part, a second planar part, and a third planar part; the first planar part is located between the first sliding slot and the second sliding slot in the width direction; the second planar part is located between the first side portion and the first sliding slot in the width direction; the third planar part is located between the second side portion and the second sliding slot in the width direction; and the first planar part, the second planar part and the third planar part have substantially the same sizes in the longitudinal extension direction of the battery pack.

Optionally, the housing has a first end and a second end opposite to each other in the longitudinal extension direction of the battery pack, and the shapes and sizes of the outer contours of the first end and the second end are substantially the same.

Optionally, wherein the first side portion and the second side portion have substantially the same shape and size of the outer contour at both ends of the battery pack in the longitudinal extension direction.

Optionally, the battery pack further comprises a plurality of battery pack terminals, and the battery pack terminal is configured for being electrically connected to a corresponding terminal of the external device; and the top recess further comprises terminal accommodating hole for at least partially accommodating the battery pack terminal, and the terminal accommodating hole is arranged in the sliding slot.

Optionally, the first sliding slot and the second sliding slot both comprise a pair of sidewalls extending in the longitudinal extension direction of the battery pack and a bottom wall arranged between the pair of sidewalls, and the terminal accommodating hole is arranged in the sidewall and/or the bottom wall.

Optionally, the battery pack further comprises a plurality of battery pack terminals, and the battery pack terminal is configured for being electrically connected to a corresponding terminal of the external device; and the top recess further comprises terminal accommodating hole for at least accommodating the battery pack terminal, and the terminal accommodating hole is arranged between the first sliding slot and the second sliding slot.

Optionally, the top portion further comprises top curved surfaces respectively connected to both ends of the top plane, and the top curved surface is connected to the bottom portion.

Optionally, the sliding slot at least partially extends to the top curved surface.

Optionally, the battery pack further comprises a power quantity display portion for displaying the power quantity of the battery pack, and the power quantity display portion is located on the top curved surface.

Optionally, the battery pack further comprises a 3C interface for charging a 3C electronic device, and the 3C interface is located on the top curved surface.

Optionally, the bottom portion comprises bottom curved surfaces respectively connected to both ends of the top curved surface, and the top curved surface is connected to the bottom curved surface in order to connect the top portion and the bottom portion.

Optionally, the battery pack further comprises projecting portion for non-slip, the bottom portion comprises a bottom plane, and the projecting portion protrudes out of the bottom plane.

Optionally, in the width direction, the locking portion is located between the first sliding slot and the second sliding slot.

Optionally, the locking portion is at least partially accommodated within the sliding slot.

Optionally, the top portion and the bottom portion are connected by ultrasonic welding or laser welding.

Optionally, wherein the ratio of the area of the top recess to the area of a projection region of the top portion in a plane parallel to the top plane is between 0.8% and 43%.

Optionally, the ratio of the area of the sliding slot to the area of the projection region of the top portion in a plane parallel to the top plane is between 0.7% and 50%.

Optionally, in the width direction, the ratio of the minimum distance between the first sliding slot and the second sliding slot to the size of the battery pack is equal to or greater than 0.23.

Optionally, in the width direction, the ratio of the minimum value of the size of the sliding slot to the size of the battery pack is equal to or greater than 0.01.

Optionally, in the longitudinal extension direction of the battery pack, the ratio of the size of the sliding slot to the size of the battery pack is equal to or greater than 0.24.

Optionally, the top portion has a start end and a tail end opposite to each other in the longitudinal extension direction of the battery pack, and when the battery pack is engaged to the external device, the start end contacts the external device prior to the tail end; both the first sliding slot and the second sliding slot comprise a pair of sidewalls extending in the longitudinal extension direction of the battery pack and arranged opposite to each other, and a bottom wall arranged between the pair of sidewalls; and in the width direction, the distance between the pair of sidewalls on the side of the sliding slot close to the start end is greater than the distance between the pair of sidewalls on the side of the sliding slot close to the tail end.

Optionally, the battery pack further comprises a circuit board, and in the width direction, the circuit board is located between the first sliding slot and the second sliding slot.

Optionally, the battery pack further comprises a circuit board, and the circuit board overlaps at least partially with a projection region of the sliding slot in a plane perpendicular to the width direction.

The present disclosure further provides an external device, comprising an external device interface, the external device interface being configured for being engaged to the battery pack according to any one of claims 1-24, the external device interface including an engaging surface and a first sliding rail and a second sliding rail arranged on the engaging surface and extending in an engaging direction, the first sliding rail mating with a first sliding slot and the second sliding rail mating with a second sliding slot to guide the external device to be engaged to the battery pack, the external device interface further including a locking and releasing device, the locking and releasing device being configured for locking and unlocking between the battery pack and the external device, the locking and releasing device including a locking member capable of moving between a locked position and an unlocked position and an unlocking member driving the locking member to move, the locking member protruding out of the engaging surface.

Optionally, the sliding rail has an opening, the battery pack slides in from the opening to be engaged to the external device, and the opening faces the outer side of the external device.

Optionally, the size of the sliding rail in the height direction is between 1.5 mm and 6 mm.

Optionally, the external device interface further comprises an arc portion connected to the engaging surface, and when the battery pack is engaged to the external device, the arc portion is attached to the housing of the battery pack.

Optionally, the external device is provided as an electrical device or an adapter, and the electrical device is provided as any one of a power tool, a household appliance, and a charger.

The present disclosure further provides an electrical combination, the electrical combination comprises the above battery pack and the external device, or the electrical combination comprises the above battery pack and the electrical device and the adapter.

The present disclosure further provides an electrical combination, the electrical combination comprises an electrical device, the above battery pack and the adapter, the electrical device comprises an electrical device interface, the electrical device interface is not capable of adapting to the above battery pack, and the electrical device is provided as any one of a power tool, a household appliance, and a charger.

Optionally, in the width direction, the ratio of the size of the external device interface to the size of the battery pack is equal to or greater than 0.31.

Optionally, in the engaging direction, the ratio of the size of the external device interface to the size of the battery pack is equal to or greater than 0.33.

The present disclosure provides a battery pack having a small size in the height direction.

In order to achieve the above objects, the present disclosure provides a battery pack, being capable of being engaged to an external device, comprising: a housing, which accommodates a plurality of cells electrically connected to each other; a battery pack interface, which is configured for being engaged to the external device to enable the battery pack to supply power to the external device or enable the external device to charge the battery pack, the battery pack interface including a sliding slot and a plurality of battery pack terminals, the sliding slot being used for guiding the battery pack to achieve mechanical connection with the external device, and the battery pack terminal being used for being electrically connected to a corresponding terminal of the external device; and a circuit board, which includes a substrate and a plurality of components connected to the substrate, the battery pack terminal being connected to the substrate, where the maximum size of the battery pack in the height direction is defined as the height H1 of the battery pack, the number of layers of cells 170 in the height direction is defined as N, the diameter of each cell is defined as D, and the height H1 of the battery pack is configured as N*D+6<H1<N*D+26.

Optionally, the maximum size of the battery pack in the width direction is defined as the width W1 of the battery pack, and the ratio of the height H1 of the battery pack to the width W1 of the battery pack is configured as N*D+6/80<H1/W1 <N*D+26/72.

Optionally, the ratio of the height H1 of the battery pack to the surface area of the battery pack is less than 0.02.

Optionally, the ratio of the maximum size of the sliding slot in the height direction to the height H1 of the battery pack is greater than 0.02.

Optionally, the circuit board overlaps at least partially with the projection region of the sliding slot in a plane perpendicular to the width direction.

Optionally, the battery pack terminal overlaps at least partially with the projection region of the sliding slot in a plane perpendicular to the width direction.

Optionally, the maximum size of the circuit board in the height direction is defined as the height H2 of the circuit board, and the ratio of the height H2 of the circuit board to the height H1 of the battery pack is not greater than 0.4.

Optionally, the height H2 of the circuit board is between 1-10 mm.

Optionally, in the engaging direction, the ratio of the size of the circuit board to the size of the battery pack is not less than 0.5.

Optionally, the battery pack further comprises a 3C interface, the 3C interface is configured for being engaged to a 3C electronic device to enable the battery pack to supply power to the 3C electronic device, and the 3C interface is also capable of being connected to an external power supply for supplying power to the battery pack, the rated power provided by the 3C interface for supplying power to the 3C electronic device is defined as the output power, the maximum size of the circuit board in the height direction is defined as the height of the circuit board, and the ratio of the output power to the height of the circuit board is greater than 2 w/mm.

Optionally, the 3C interface is provided as a Type-C interface.

Optionally, in the height direction, the maximum size of the battery pack terminal is less than or equal to the maximum size of the plurality of components.

Optionally, the substrate comprises a first face away from the cell and a second face close to the cell, and the components comprise a first set of components arranged on the first face and a second set of components arranged on the second face.

Optionally, in the height direction, the distance between the first face and the highest point of the first set of components is between 0-10 mm.

Optionally, in the height direction, the distance between the second face and the lowest point of the second set of components is between 0-5 mm.

### BRIEF DESCRIPTION OF THE DRAWINGS

The above objects, technical solutions, and beneficial effects of the present disclosure can be clearly obtained by the following detailed description of specific embodiments capable of realizing the present disclosure, together with the description of the accompanying drawings.
FIG. 1, FIG. 2 and FIG. 3 are schematic views of a battery pack in an embodiment of the present disclosure in different viewpoints.
FIG. 4 is a schematic view of the battery pack shown in FIG. 1 with a top removed.
FIG. 5 is a side view of the battery pack shown in FIG. 1 with the top removed.
FIG. 6 and FIG. 7 are side views of the battery pack shown in FIG. 1 viewed at a first side portion and a second side portion, respectively.
FIG. 8 and FIG. 9 are side views of the battery pack shown in FIG. 1 viewed at both ends in a front and rear direction, respectively.
FIG. 10 and FIG. 11 are schematic views of terminal accommodating holes shown in FIG. 1 located at a pair of sidewalls of a sliding slot, respectively.
FIG. 12 is a schematic view of the terminal accommodating hole shown in FIG. 1 located at a bottom wall of the sliding slot.
FIG. 13 is a schematic view of the battery pack shown in FIG. 1 charging a 3C electronic device through a 3C interface.
FIG. 14 is a schematic view of the battery pack shown in FIG. 1 being connected to a plug through the 3C interface.
FIG. 15 is a schematic view of a battery pack in the prior art.
FIG. 16 and FIG. 17 are schematic views of a battery pack in an embodiment of the present disclosure in different viewpoints.
FIG. 18 is an exploded view of the battery pack shown in FIG. 16.
FIG. 19 is a schematic view of the battery pack shown in FIG. 16 with a housing removed.
FIG. 20 is a schematic view of the battery pack shown in FIG. 16 with a first side portion removed.
FIG. 21 is a side view of the battery pack shown in FIG. 16 viewed at the first side portion.
FIG. 22 is a sectional view of the battery pack shown in FIG. 16 in a direction B 1-B 1 in FIG. 20.
FIG. 23 is a schematic view of a circuit board shown in FIG. 16 and various components connected to the circuit board.
FIG. 24 is a side view of the circuit board shown in FIG. 16 and the various components connected to the circuit board.
FIG. 25 is a schematic view of a battery pack in an embodiment of the present disclosure.
FIG. 26 is a schematic view of the battery pack shown in FIG. 25 with a top removed.
FIG. 27 is a schematic view of a battery pack in an embodiment of the present disclosure.
FIG. 28 is a schematic view of an electrical combination in an embodiment of the present disclosure.
FIG. 29 is a side view of the electrical combination shown in FIG. 28.
FIG. 30 is a schematic view of an electrical device shown in FIG. 28 when being engaged to a battery pack.
FIG. 31 is a schematic view of the electrical device shown in FIG. 28.
FIG. 32 is a side view of the electrical device shown in FIG. 28.
FIG. 33 is a sectional view of the electrical device shown in FIG. 28 in a direction B1-B1 in FIG. 32 when an unlocking member is not triggered.
FIG. 34 is a sectional view of the electrical device shown in FIG. 28 in the direction B1-B1 in FIG. 32 when an unlocking member is triggered.
FIG. 35 is a schematic view of an electrical combination in an embodiment of the present disclosure.
FIG. 36 is a schematic view of an electrical device shown in FIG. 35 when being engaged to a battery pack.
FIG. 37 is a schematic view of the electrical device shown in FIG. 35.
FIG. 38 is a schematic view of an electrical combination in an embodiment of the present disclosure.
FIG. 39 is a schematic view of an electrical device shown in FIG. 38 when being engaged to a power supply device.
FIG. 40 is a schematic view of the electrical device shown in FIG. 38.
FIG. 41 is a schematic view of an adapter shown in FIG. 38 when being engaged to a battery pack.
FIG. 42 is a top view of a power supply device shown in FIG. 38.
FIG. 43 and FIG. 44 are schematic views of the adapter shown in FIG. 38 in different viewpoints.
FIG. 45 is a schematic view of the adapter shown in FIG. 38 with a cover plate removed.
FIG. 46 is a three-dimensional schematic view of the adapter shown in FIG. 38 with a first adapter terminal, and a second adapter terminal electrically connected to a circuit board of the adapter.
FIG. 47 is a top view of the adapter shown in FIG. 38.
FIG. 48 is a side view of the adapter shown in FIG. 38.
FIG. 49 is a sectional view of the adapter shown in FIG. 38 in a direction C1-C1 in FIG. 47 when a first unlocking member is not triggered.
FIG. 50 is a sectional view of the adapter shown in FIG. 38 in the direction C1-C1 in FIG. 47 when the first unlocking member is triggered.
FIG. 51 is a sectional view of the adapter shown in FIG. 38 in a direction D1-D1 in FIG. 48 when a second unlocking member is not triggered.
FIG. 52 is a sectional view of the adapter shown in FIG. 38 in the direction D1-D1 in FIG. 48 when the second unlocking member is triggered.
FIG. 53 is a schematic view of an electrical combination in an embodiment of the present disclosure.
FIG. 54 is a schematic view of a charger shown in FIG. 53 when being engaged to a power supply device.
FIG. 55 is a schematic view of an electrical combination in an embodiment of the present disclosure.
FIG. 56 is a schematic view of a power supply device shown in FIG. 55.
FIG. 57 and FIG. 58 are schematic views of an adapter shown in FIG. 55 in different viewpoints.
FIG. 59 is a schematic view of the electrical device shown in FIG. 55.
FIG. 60 is a schematic view of an electrical system in an embodiment of the present disclosure.
FIG. 61 is a schematic view of an electrical system in an embodiment of the present disclosure.
FIG. 62 is a schematic view of an electrical system in an embodiment of the present disclosure.

### DETAILED DESCRIPTION

The details of the present disclosure can be more clearly understood in conjunction with the accompanying drawings and the description of specific implementations of the present disclosure. However, the specific implementations of the present disclosure described herein are for the sole purpose of explaining the present disclosure and are not to be construed in any way as a limitation of the present disclosure. Under the teachings of the present disclosure, the skilled person may conceive any possible deformations based on the present disclosure, and these should be regarded as falling within the scope of the present disclosure.

It is to be noted that: when an element is referred to as "being arranged on" another element, the element may be directly on the other element, or an intermediate element may be present. When an element is considered to be "connected to" another element, the element may be directly connected to the other element, or an intermediate element may also be present. Terms "mounted", "connected", and "connection" are to be understood in a broad sense, such as a mechanical connection or an electrical connection, or a connection within two elements, or a direct connection, or an indirect connection through an intermediate medium, and the specific meaning of the above terms may be understood by a person of ordinary skill in the art according to specific situations. The terms "vertical", "horizontal", "upper", "lower", "left", "right", and similar expressions used herein are only for purposes of illustration, but not indicate a unique implementation.

Unless otherwise defined, meanings of all technical and scientific terms used herein are the same as that usually understood by a person skilled in the technical field to which the present disclosure belongs. Terms used herein are merely intended to describe the specific implementations, but are not intended to limit the present disclosure. As used herein, the term "and/or" includes any and all combinations of one or more of the relevant listed items.

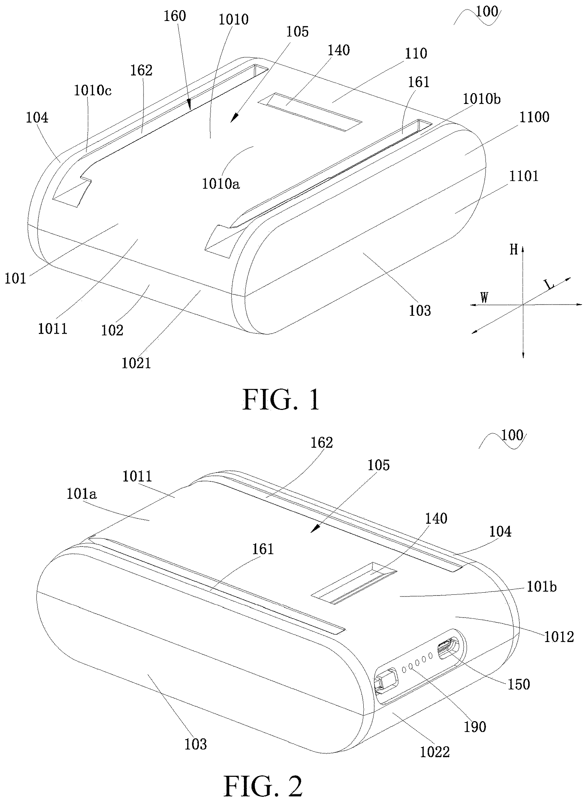

Referring to FIG. 1 to FIG. 14, a battery pack 100 can be engaged to an external device. The external device may be an electrical device, and may also be an adapter, and the electrical device may be a power tool, a household appliance, or a charger. The power tool can be provided as a hot glue gun, an electric drill, an angle grinder, a chain saw, a lawn mower, etc., and the household appliance can be provided as a dust collector, an electric fan, a camping lamp, a hand-held hanging ironing machine, etc.

When the battery pack 100 is engaged to the external device, the direction in which the external device is viewed from the battery pack 100 is defined as the upper portion, and the opposite direction of the upper portion is defined as the lower portion, and the upper and lower direction is the height direction H. The longitudinal extension direction of the battery pack is defined as the front and rear direction L, the height direction H is perpendicular to the front and rear direction L, and the direction that is perpendicular to both the front and rear direction L and the height direction H is defined as the width direction W.

As shown in FIG. 1 to FIG. 4, the battery pack 100 includes a housing 110 and a cell set accommodated in the housing 110.

Specifically, the cell set includes a plurality of cells 170 electrically connected to each other, and the cell 170 may be provided as a nickel-metal hydride battery or lithium-ion battery capable of being charged and discharged multiple times. 5 cells 170 are included, the cell 170 is provided into a cylindrical shape, each cell 170 extends longitudinally in the width direction, and the 5 cells 170 are sequentially distributed in the front and rear direction. Of course, the number of the cells 170 can be a different one, such as 3, 6, 15 and the like, and the cell 170 can also be provided into other shapes, such as a bag shape, and the cells 170 are stacked, which is not limited herein. All the cells 170 are electrically connected to each other by means of connecting pieces 171, and the connecting piece 171 is welded to the positive pole and the negative pole of each cell.

The cell set further includes a holder 180 for fixing the cell 170, the holder 180 includes a plurality of cylinder walls, the inner cavity of each cylinder wall forms an accommodating hole (not shown) for at least partially receiving one cell, and the outer peripheral surface of the cell 170 is coupled to the shape of the accommodating hole by matching. Optionally, the holder 180 is made of a heat conduction material, and the holder 180 is able to cover the entire peripheral surface of the cell 170, so that the heat generated by the cell 170 during operation can be better conducted by the holder 180, which is conducive to heat dissipation of the cell 170.

The battery pack 100 includes a battery pack interface 105, which is configured for being engaged to an external device to enable the battery pack 100 to supply power to the external device, or enable the external device to charge the battery pack 100.

The battery pack interface 105 includes a plurality of battery pack terminals 120, and the battery pack terminal 120 is configured for being electrically connected to a corresponding terminal of the external device so that the battery pack 100 can supply power to the external device, or the external device can supply power to the battery pack 100.

The battery pack 100 further includes a circuit board 130, and the circuit board 130 includes a substrate 131 and a plurality of components 1300 connected to the substrate 131.

The maximum size of the battery pack 100 in the height direction H is defined as the height H1 of the battery pack 100, the number of layers of the cells 170 in the height direction H is defined as N, the diameter of each cell 170 is defined as D, and the height H1 of the battery pack 100 is configured as N*D+6<H1<N*D+26.

In an embodiment, when the number of the cells 170 is 5, the number N of layers of the cells 170 in the height direction H is 1, and a 18650 cell is used as the cell 170, in other words., the diameter D of one cell 170 is 18 mm, and then the range of the height H1 of the battery pack 100 meets: 24 mm<H1<44 mm, optionally, the height H1 of the battery pack 100 is 37 mm.

In an embodiment, when the number of the cells 170 is 10, the number N of layers of the cells 170 in the height direction H is 2, a 18650 cell is used as the cell 170, and then the range of the height H1 of the battery pack 100 meets: 42 mm<H1<62 mm, optionally, the height H1 of the battery pack 100 is 57 mm.

In an embodiment, when the number of the cells 170 is 5, the number N of layers of the cells 170 in the height direction H is 1, and a 21700 cell is used as the cell 170, in other words., the diameter D of one cell 170 is 21 mm, and then the range of the height H1 of the battery pack 100 meets: 27 mm<H1<47 mm, optionally, the height H1 of the battery pack 100 is 41 mm.

In an embodiment, when the number of the cells 170 is 10, the number N of layers of the cells 170 in the height direction H is 2, a 21700 cell is used as the cell 170, and then the range of the height H1 of the battery pack 100 meets: 48 mm<H1<68 mm, optionally, the height H1 of the battery pack 100 is 61 mm.

The above embodiments are for illustrative purposes only, and other cases can be obtained in the same way and will not be enumerated in the present disclosure. The height H1 of the battery pack 100 satisfies the above range, so that the height H1 of the battery pack 100 is significantly smaller than the height of a battery pack in the prior art, and the battery pack 100 is more compact in structure and smaller in the size, is convenient for the user to hold, and is more adaptable to various application scenarios.

Optionally, the maximum size of the battery pack 100 in the width direction W is defined as the width W1 of the battery pack 100, and the ratio of the height H1 of the battery pack 100 to the width W1 of the battery pack 100 is configured as N*D+6/80<H1/W1<N*D+26/72.

Optionally, the ratio of the height H1 of the battery pack 100 to the surface area of the battery pack 100 is less than 0.02. This can satisfy the smaller value of H1 and also ensure that the surface area of the battery pack 100 is relatively small, which means that the height of the battery pack 100 is small, and at the same time, the surface of the battery pack 100 is flat, and the battery pack is compact in structure, and small in size, which is convenient for the user to use and carry. Optionally, the ratio of the height H1 of the battery pack 100 to the surface area of the battery pack 100 is between 0.004 and 0.007.

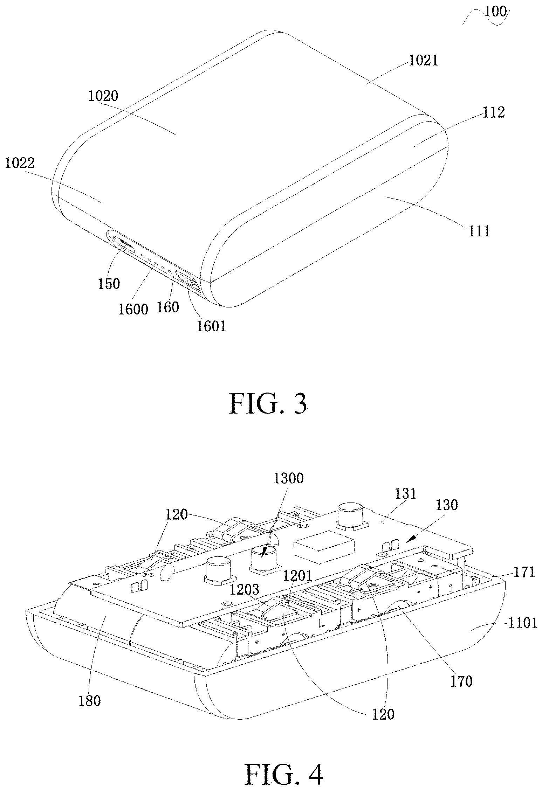

As shown in FIG. 4, in the height direction H, the circuit board 130 is arranged between the housing 110 and the cell set, and the circuit board 130 extends longitudinally in the front and rear direction L.

In an embodiment, the circuit board 130 is located between an end of the housing 110 in the longitudinal extension direction of the battery pack 100 and the cell set, which can reduce the height H1 of the battery pack 100 and make the battery pack 100 smaller in size. Optionally, the circuit board 130 may be provided in a plurality of pieces, e.g., 2 or 3 pieces, and the plurality of pieces of circuit boards are electrically connected to each other with wires.

In an embodiment, the circuit board 130 is located between both sides of the housing 110 in the width direction W and the cell set, which can also reduce the height H1 of the battery pack 100.

Further, the battery pack terminal 120 is electrically connected to the substrate 131, and optionally, the battery pack terminal 120 is welded to the substrate 131 or connected to the substrate 131 via a wire.

As shown in FIG. 4, the battery pack terminal 120 includes a pin portion 1201 connected to the circuit board 130 and a contact portion 1203 mating with a corresponding terminal of the external device. Optionally, the contact portion 1203 mates with the corresponding terminal of the external device only on one side in the front and rear direction L. The contact portion 1203 is provided as an arc-shaped portion curved and extending toward the upper portion, and the pin portion 1201 is provided as a flat plate portion welded to the circuit board 130.

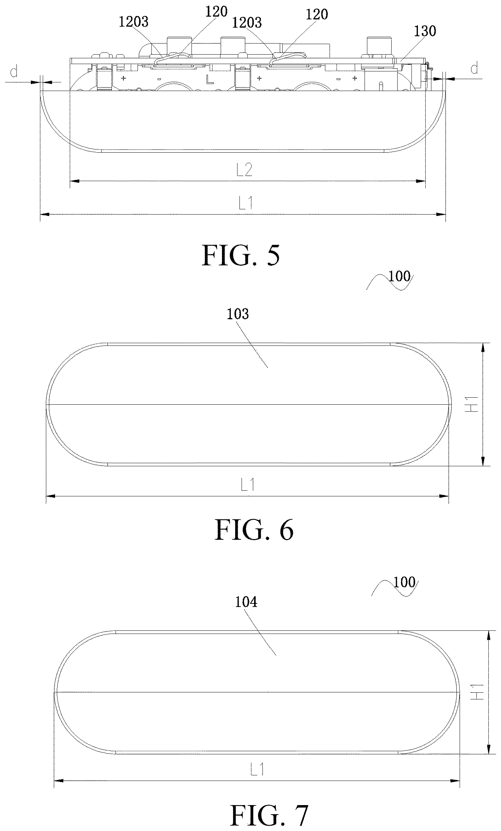

Optionally, as shown in FIG. 5, a projection of the circuit board 130 in a plane perpendicular to the width direction W overlaps at least partially with a projection of the battery pack terminal 120 in a plane perpendicular to the width direction W. Further, the projection of the circuit board 130 in a plane perpendicular to the width direction W overlaps at least partially with a projection of the contact portion 1203 in a plane perpendicular to the width direction W. Such an arrangement can make the circuit board 130 and the battery pack terminal 120 basically located in the same plane, which can reasonably arrange the layout of the circuit board 130 and the battery pack terminal, thereby reducing the height of the battery pack 10, making the battery pack small in size and facilitating use and carry.

Optionally, in the front and rear direction L, the ratio of the size of the circuit board 130 to the size of the battery pack 100 is not less than 0.5. Optionally, in the front and rear direction L, the ratio of the size of the circuit board 130 to the size of the battery pack 100 is 0.8. In a limit case, the length L2 of the circuit board 130 may be set to L1 minus the wall thickness d of both ends of the housing 100 in the front and rear direction, in other words., L2=L1-2d. This ensures that the circuit board 130 has sufficient space to arrange a control circuit.

As shown in FIG. 1, the battery pack interface 105 includes a sliding slot 160, which is configured for guiding the battery pack 100 to realize mechanical connection with the external device, and the sliding slot 160 includes a first sliding slot 161 and a second sliding slot 162, and the first sliding slot 161 and the second sliding slot 162 are arranged on both sides of the battery pack 100 in the width direction W, respectively. Optionally, the extension direction of the sliding slot 160 is provided as the front and rear direction. Further, the ratio of the maximum size of the sliding slot 160 in the height direction H to the height H1 of the battery pack 100 is greater than 0.02, which ensures the smooth engaging of the battery pack 100 with the external device. Optionally, the ratio of the maximum size of the sliding slot in the height direction H to the height H1 of the battery pack 100 is equal to 0.2. If this ratio is too small, it will result in the unreliable plugging connection of the battery pack 100 with the external device, and if this ratio is too large, it will affect the arrangement of the other parts inside the battery pack 100, which will in turn result in that the battery pack 100 is too large in size and incompact in structure.

The battery pack interface 105 further includes a locking portion 140, which is configured for realizing locking between the battery pack 100 and the external device. As shown in FIG. 1, in the width direction W, the locking portion 140 is located between the first sliding slot 161 and the second sliding slot 162. In other embodiments, the locking portion 140 may also be at least partially accommodated within the sliding slot 160, and optionally, 2 locking portions 140 are included, with both the first sliding slot 161 and the second sliding slot 162 at least partially accommodating 1 locking portion 140.

The housing 110 includes a top portion 101 and a bottom portion 102 arranged opposite to each other, and a first side portion 103 and a second side portion 104 arranged opposite to each other. The first side portion 103, the second side portion 104, and the sliding slot 160 all extend in the longitudinal direction of the battery pack 100. Optionally, the longitudinal direction of the battery pack 100 is provided as the front and rear direction L.

The top portion 101 includes a top plane 1010 and a top recess under the top plane 1010 in the height direction, and the top recess includes the sliding slot 160 and the locking portion 140; and the sliding slot 160 is recessed downward in the height direction H from the top plane 1010.

FIG. 15 illustrates the form of a battery pack 100' for power tools common in the prior art. A locking portion 140' in the battery pack 100' protrudes out of a top plane 1010', the locking portion 140' is provided as a locking projection, and a sliding slot 160' is recessed in the width direction W from a first side portion 103' or a second side portion 104' to one side of the cell, which results in the shape of the battery pack 100' being irregular, and the battery pack 100' being large in height and large in size, causing inconvenience for a user to carry and use the battery pack. In contrast, the top portion 101 of the battery pack 100 in this embodiment is free of projections, and the top portion is smooth and flat, which on the one hand enables the user to hold the battery pack comfortably, and makes the battery pack convenient to use and carry; on the other hand, the size of the battery pack 100 in the height direction H will be reduced, and the structure will be more compact.

As shown in FIG. 6, the sliding slot 160 is not visible when viewed from the first side portion 103; and as shown in FIG. 7, the sliding slot 160 is not visible either when viewed from the second side portion 104. Notably, the sliding slot 160 is not visible when viewed from the first side portion 103 can be understood as follows: by stipulating the line of sight of a person as a parallel projection line, and then looking right facing the first side portion 103, the sliding slot 160 cannot be seen in the figure drawn by an orthographic projection method of the contour of the battery pack 100 that is seen. Similarly, similar expressions of the present application may be similarly understood and will not be repeated hereinafter.

As shown in FIG. 1 and FIG. 4, a part of the first side portion 103 and the second side portion 104 is integrally molded with the top 101 to form a first housing 1100, and the rest of the first side portion 103 and the second side portion 104 is integrally molded with the bottom 102 to form a second housing 1101. Optionally, the first housing 1100 and the second housing 1101 are connected by ultrasonic welding or laser welding, so that the housing 110 does not need to be provided with fasteners, and the battery pack 100 has a simple structure and small size, which is convenient for the user to use and carry.

As shown in FIG. 6 and FIG. 7, the top portion 101 defines a top body outer contour and the bottom portion 102 defines a bottom body outer contour, and as viewed from the first side portion 103 and the second side portion 104, neither the top body outer contour nor the bottom body outer contour extends beyond the outer contours of the first side portion 103 and the second side portion 104. Further, viewed from the first side portion 103 and the second side portion 104, the top body outer contour and the bottom body outer contour form a centrosymmetric figure.

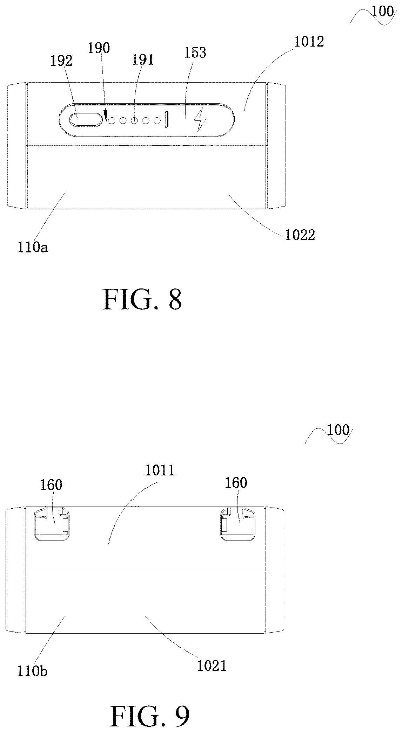

As shown in FIG. 6 and FIG. 7, the outer contours of the battery pack 100, as viewed from the first side portion 103 and the second side portion 104, are substantially the same. As shown in FIG. 8 and FIG. 9, the housing 110 has a first end 110a and a second end 110b opposite to each other in the longitudinal extension direction of the battery pack 100, and the shapes and sizes of the outer contours of the first end 110a and the second end 110b are substantially the same. Such an arrangement makes the battery pack 100 symmetrical and regular in structure, and more comfortable for the user to hold.

Further, the first side portion 103 and the second side portion 104 have substantially the same shape and size at both ends of the battery pack 100 in the longitudinal extension direction. Such an arrangement makes the battery pack 100 symmetrical and regular in structure, more comfortable for the user to hold, and convenient for the user to use and carry.

Optionally, the ratio of the area of the top recess to the area of a projection region of the top portion 101 in a plane parallel to the top plane 1010 is between 0.8% and 43%. Further, the ratio of the area of the sliding slot 160 to the area of the projection region of the top portion 101 in a plane parallel to the top plane 1010 is between 0.7% and 50%. If the ratio of the area of the top recess or the sliding slot 160 to the area of the projection region of the top portion 101 in a plane parallel to the top plane 1010 is too small, the engaging function of the battery pack 100 cannot be achieved; if the ratio of the area of the top recess to the area of the projection region of the top portion 101 in a plane parallel to the top plane 1010 is too large, then the overall shape of the battery pack is not smooth or flat enough, and it is not comfortable for the user to hold, and at the same time, the external surface of the external device engaged to the battery pack 100 will have a lot of projections, and the size will become larger, so it is not comfortable for the user to hold and inconvenient to carry.

In the width direction W, the ratio of the minimum distance W2 between the first sliding slot 161 and the second sliding slot 162 to the size W1 of the battery pack 100 is equal to or greater than 23%, which ensures that the battery pack 100 is reliably engaged to the external device, and if the minimum distance between the first sliding slot 161 and the second sliding slot 162 is too small, it will result in unbalanced engaging between the battery pack 100 and the external device and loosening occurs easily. Optionally, in the width direction W, the ratio of the minimum distance W2 between the first sliding slot 161 and the second sliding slot 162 to the size W1 of the battery pack 100 is 70%. In the width direction W, the ratio of the minimum value of the size of the sliding slot 160 to the size of the battery pack 100 is greater than 0.01. Optionally, in the width direction W, the ratio of the minimum value of the size of the sliding slot 160 to the size of the battery pack 100 is 0.06. In the front and rear direction L, the ratio of the size L3 of the sliding slot 160 to the size L1 of the battery pack 100 is greater than 0.24. Optionally, in the front and rear direction L, the ratio of the size L3 of the sliding slot 160 to the size L1 of the battery pack 100 is 0.7. In the width direction W and the front and rear direction L, if the ratio of the size L3 of the sliding slot 160 to the size L1 of the battery pack 100 is too small, it will result in the engaging of the battery pack 100 with the external device not being sufficiently robust, and the battery pack 100 is prone to being disengaged from the external device in the event of falling or vibration.

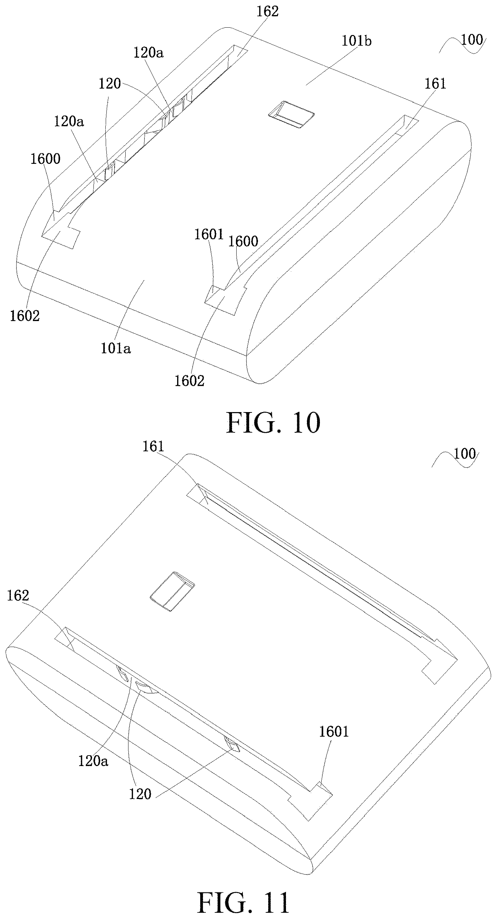

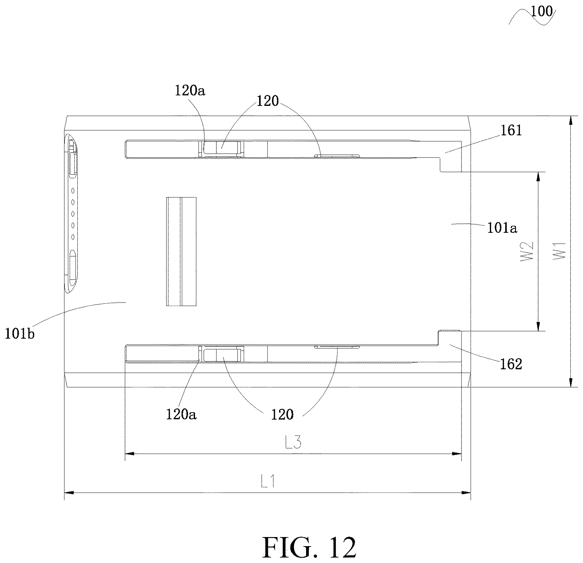

As shown in FIG. 10, the top portion 101 has a start end 101a and a tail end 101b opposite to each other in the longitudinal extension direction of the battery pack 100, and when the battery pack 100 is engaged to the electrical device 20, the start end 101a contacts the electrical device 20 prior to the tail end 101b. Both the first sliding slot 161 and the second sliding slot 162 include two sidewalls 1600 and 1601 extending in the engaging direction and arranged opposite to each other, and a bottom wall 1602 arranged between the pair of sidewalls 1600 and 1601. As shown in FIG. 12, in the width direction, the distance between the pair of sidewalls 1600 and 1601 on the side of the sliding slot 160 close to the start end 101a is greater than the distance between the pair of sidewalls 1600 and 1601 on the side of the sliding slot 160 close to the tail end 101b. This makes it easier for the sliding slot 160 to slide into or out of the external device, thereby facilitating engaging or disengaging to the external device.

Referring to FIG. 1, the top plane 1010 includes a first planar part 1010a, a second planar part 1010b, and a third planar part 1010c. In the width direction W, the first planar part 1010a is located between the first sliding slot 161 and the second sliding slot 162, the second planar part 1010b is located between the first side portion 103 and the first sliding slot 161, and the third planar part 1010c is located between the second side portion 104 and the second sliding slot 162. The first planar part 1010a, the second planar part 1010b and the third planar part 1010c have substantially the same sizes in the extension direction of the sliding slot 160. This can make the area of the top plane 1010 of the battery pack take up a large proportion of the area of the battery pack, so that when the user holds the battery pack 100, the user can grip the battery pack more comfortably, and at the same time, it is more convenient to carry.

Referring to FIG. 1 to FIG. 3, the top potion 101 further includes top curved surfaces 1011, 1012 respectively connected to both ends of the top plane 1010, and the top curved surfaces 1011, 1012 are respectively connected to both ends of the bottom 102. Such an arrangement makes the shape of the battery pack 100 smoother so that the user can hold the battery pack comfortably, which also reduces the size of the battery pack, facilitating use and carry.

Further, the bottom 102 includes bottom curved surfaces 1021, 1022 respectively connected to both ends of the top curved surfaces 1011, 1012, the top curved surface 1011 is connected to the bottom curved surface 1021, and the top curved surface 1012 is connected to the bottom curved surface 1022 in order to connect the top 101 and the bottom 102. Specifically, the top curved surfaces 1011, 1012 and the bottom curved surfaces 1021, 1022 are all curved toward one side of the cell 170.

Optionally, as shown in FIG. 1 and FIG. 9, the sliding slot 160 extends to the top curved surface 1011, which enables the battery pack 100 to be connected more securely when engaged to the external device.

As shown in FIG. 3, the bottom 102 further includes a bottom plane 1020, and in the front and rear direction L, both ends of the bottom plane 1020 are connected to the bottom curved surfaces 1021, 1022, respectively. Optionally, the surface area of the top plane 1010 or the bottom plane 1020 is greater than the surface area of the other outer surfaces of the housing 110.

Referring to FIG. 10 to FIG. 12, the top recess further includes terminal accommodating holes 120a for at least partially accommodating the battery pack terminal 120, and the terminal accommodating hole 120a is formed in the sliding slot 160. Optionally, the number of the terminal accommodating holes 120a is the same as the number of the battery pack terminals 120, and each battery pack terminal 120 is at least partially exposed to a corresponding terminal accommodating hole 120a.

Further, as shown in FIG. 10, the terminal accommodating hole 120a is formed in the sidewall 1600. As shown in FIG. 11, the terminal accommodating hole 120a is formed in the sidewall 1601. As shown in FIG. 12, the terminal accommodating hole 120a is formed in the bottom wall 1602. Of course, it is readily conceivable to those skilled in the art that the terminal accommodating hole 120a may also be formed in any one or more of the sidewall 1600 and the sidewall 1601 and the bottom wall 1602, which will not be repeated herein.

As shown in FIG. 3 and FIG. 8, the battery pack 100 further includes a power level display portion 190 for displaying the power level of the battery pack 100. Optionally, the power level display portion 190 is located on the top curved surface 1011. Of course, the power level display portion 190 may also be located on the top curved surface 1012 or on the bottom curved surface 1021 or 1022. Optionally, the power level display portion 190 includes a plurality of power level display lamps 191 and a display button 192 controlling the plurality of power level display lamps 191 to be turned on or off.

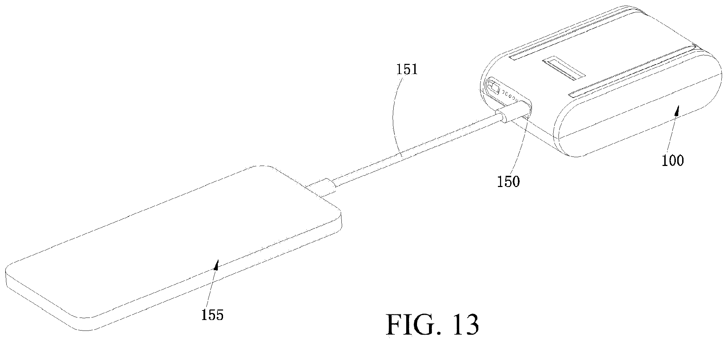

As shown in FIG. 13, the battery pack 100 further includes a 3C interface 150, and the 3C interface 150 is configured for being engaged to a 3C electronic device 155 to enable the battery pack to supply power to the 3C electronic device 155. The 3C electronic device 155 may be an electronic device such as a mobile phone, a computer and a camera. In this way, the battery pack 100 cannot only supply power to the electrical device 20, but also supply power to a 3C electronic product by connecting a data line 151, which plays a role similar to that of a portable charger.

As shown in FIG. 14, the 3C interface 150 can also be connected to an external power supply to supply power to the battery pack 100, so that the user does not need to purchase a charger for charging the battery pack 100 while purchasing the battery pack 100, and the charging of the battery pack 100 can be realized by utilizing an existing computer charger or mobile phone charger 152. Optionally, the external power supply is provided as a mains supply.

In an embodiment, the 3C interface 150 is provided as a Type-C interface. Optionally, as shown in FIG. 8, the battery pack 100 further includes a dust cover 153 for covering a second battery pack interface 150, and the dust cover 153 is pivotally connected to the housing 110 to open or close the 3C interface 150, so that the dust cover 153 can be pivotally opened when the user needs to use the 3C interface 150, thereby being able to prevent impurities from entering the 3C interface 150.

Optionally, the 3C interface 150 is located on the top curved surface and is arranged side by side with the power level display portion 190. As shown in FIG. 2, the 3C interface 150 is located on the top curved surface 1012, but of course, the 3C interface 150 may also be located on the top curved surface 1011 or on the bottom curved surface 1021 or 1022.

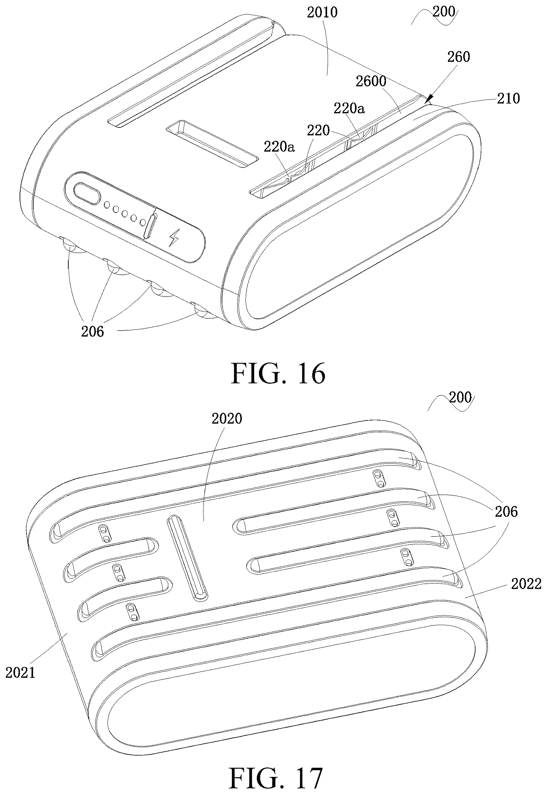

Referring to FIG. 16 to FIG. 24, a battery pack 200 is a kind of deformation of the battery pack 100, and for the convenience of expression, the same structure in the battery pack 200 and the battery pack 100 is indicated by a similar number and will not be repeated, and the different structures will be discussed in detail below.

Referring to FIG. 16 and FIG. 17, the battery pack 200 further includes projecting portions 206 for achieving an anti-slip role, and the projecting portion 206 protrudes out of a bottom plane 2020. The projecting portion 206 extends to bottom curved surfaces 2021, 2022. Optionally, the projecting portion 206 is provided as a plurality of rubber strips adhered to a bottom 202 and extending from the bottom plane 2020 to the bottom curved surfaces 2021, 2022. When the battery pack 200 is placed on a plane such as a tabletop or bottom surface, the projecting portion 206 is in direct contact with the plane such as the tabletop or bottom surface for supporting the battery pack 200.

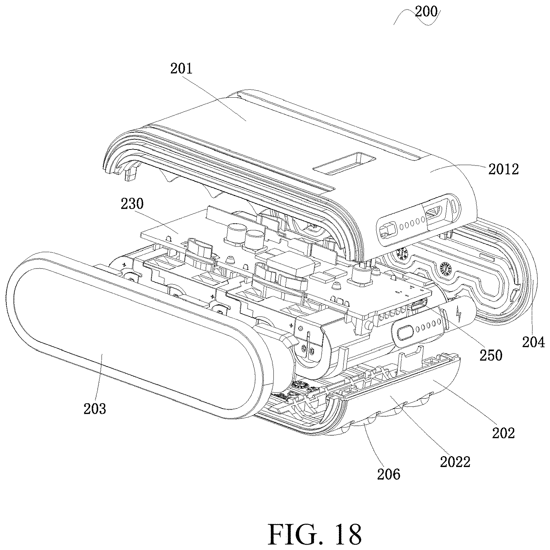

As shown in FIG. 18, a top 201, the bottom 202, and first side portions 203, 204 constitute four components of a housing 210, respectively. Optionally, the top 201 and the bottom 202 are connected by ultrasonic welding or laser welding, and the first side portions 203, 204 and the top 201 and the bottom 202 are also connected by ultrasonic welding or laser welding. By ultrasonic welding or laser welding, the surface of a housing 210 does not need to be provided with fasteners, and the surface of the housing 210 is smoother and flatter, which is convenient for the user to use and carry.

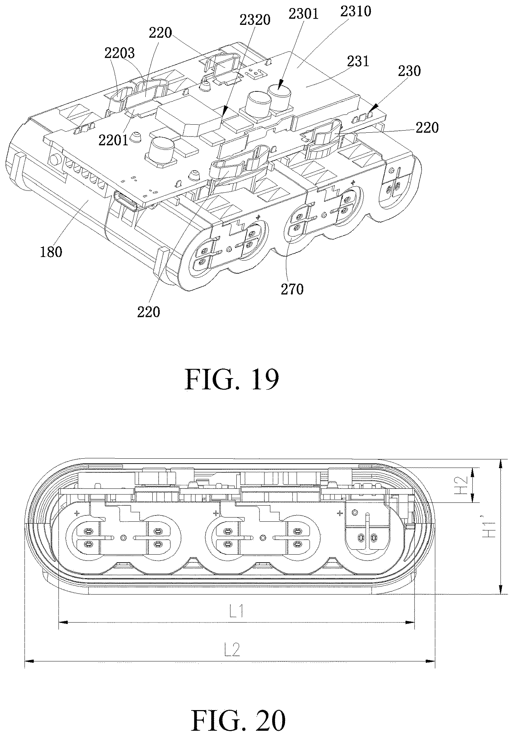

As shown in FIG. 1, terminal accommodating holes 220a are formed in a sidewall 2600 of a sliding slot 260, and battery pack terminals 220 are at least partially exposed to corresponding terminal accommodating holes 220a. In this embodiment, the battery pack terminal 220 also mates with a corresponding terminal of the external device only on one side in the front and rear direction L. As shown in FIG. 19, a contact portion 2203 is provided as an arc-shaped portion curved toward the first side portion 203 or the second side portion 204 and extending in the front and rear direction L, and a pin portion 2503 is welded to the side edge of the circuit board 230 close to the first side portion 203 or the second side portion 204.

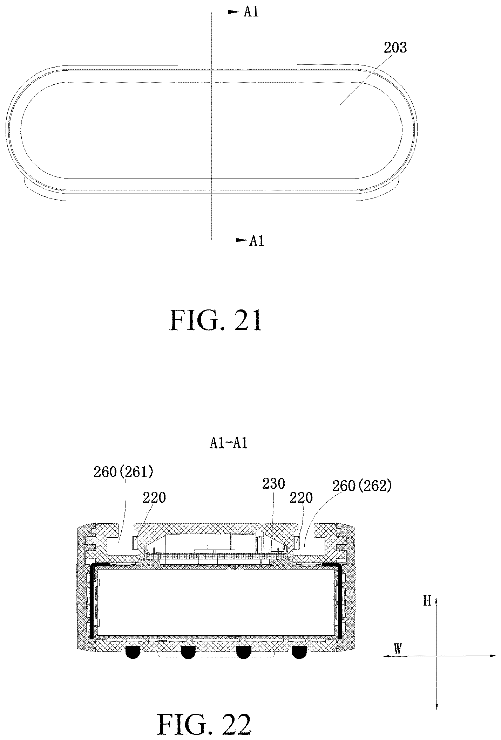

As shown in FIG. 22, the battery pack terminal 220 overlaps at least partially with a projection region of the sliding slot 260 in a plane perpendicular to the width direction W. Such an arrangement can reasonably utilize the space of the sliding slot 260 in the height direction H, so that the battery pack 200 has a compact structure and a small size, which is convenient for the user to use and carry.

As shown in FIG. 22, in the width direction W, the circuit board 230 is located between a first sliding slot 261 and a second sliding slot 262. Optionally, the circuit board 230 overlaps at least partially with a projection region of the sliding slot 260 in a plane perpendicular to the width direction W. Such an arrangement can reasonably utilize the space of the sliding slot 260 in the width direction W and height direction H, saving the space occupied by the circuit board 230, so that the battery pack 200 has a compact structure and a small size, which is convenient for the user to use and carry.

Optionally, as shown in FIG. 20, the maximum size of the circuit board 230 in the height direction H is defined as the height H2 of the circuit board 230, and the ratio of the height H2 of the circuit board 230 to the height H1' of the battery pack 100 is not greater than 0.4. If this ratio is too large, it will result in a greater height of the battery pack 200, a larger overall size, and an uncompact structure. Optionally, the ratio of the maximum size H2 of the circuit board 230 in the height direction H to the height H1' of the battery pack 200 in the height direction H is 0.2. It is to be noted that "the maximum size of the circuit board 230 in the height direction H" can be understood as the distance between the highest point and the lowest point of a substrate 231 and components 2310 and the battery pack terminal 220 to which the substrate 131 is connected, in the height direction H. Optionally, the maximum size of the circuit board 230 in the height direction H is between 1-10 mm.

In this embodiment, as shown in FIG. 18 and FIG. 20, the battery pack 200 includes a 3C interface 250, the rated power provided by the 3C interface 250 for supplying power to the 3C electronic device is defined as the output power, the maximum size of the circuit board 230 in the height direction H is defined as the height H2 of the circuit board 230, and the ratio of the output power to the height H2 of the circuit board 230 is greater than 2 w/mm. If the output power is too low, the battery pack 200 is unable to meet the demand for supplying power to a high-power 3C electronic device such as a computer, and if the output power is too high, the sizes of the relevant components on the circuit board 230 will become larger, resulting in the height of the circuit board 230 becoming greater, and thus the size of the battery pack 200 will become larger, making it inconvenient for the user to use and carry. Optionally, the output power is 60 w, and the height H2 of the circuit board 230 is 6.7 mm. Optionally, the 3C interface 250 is provided as a Type-C interface, and the 3C interface 250 is connected to the circuit board 230.

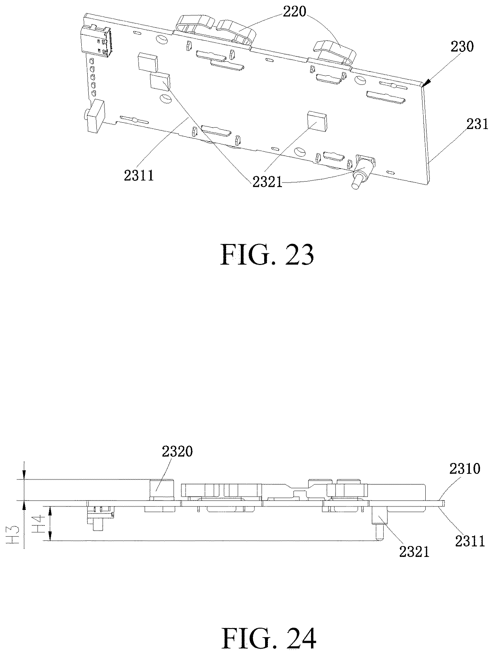

Further, as shown in FIG. 23 and FIG. 24, the substrate 231 includes a first face 2310 on the side away from a cell 270 and a second face 2311 on the side close to the cell 270, and the components include a first set of components 2320 arranged on the first face 2310 and a second set of components 2321 arranged on the second face 2311. This can reasonably utilize the space on the upper and lower sides of the substrate, reduce the space occupied by the component, and is conducive to reducing the volume of the battery pack. Optionally, in the height direction, the distance H3 between the first face 2311 and the highest point of the first set of components 2320 is between 0-10 mm, and the distance H4 between the second face 2311 and the lowest point of the second set of components 2321 is between 0-5 mm.

Optionally, in the height direction H, the maximum size of the battery pack terminal 220 is less than or equal to the maximum size of the component, in other words, the maximum size of the component will affect the height H2 of the circuit board 230, and the component has a larger size in the height direction H, which is able to satisfy the need for the battery pack 200 to supply power to the high-power 3C electronic device through the 3C interface 250.

As shown in FIG. 19, the component with the largest size in the height direction H is a power component, and in general, the higher the output power, the larger the size of the power component in the height direction H. Optionally, the power component with the largest size in the height direction H is a capacitor 2301.

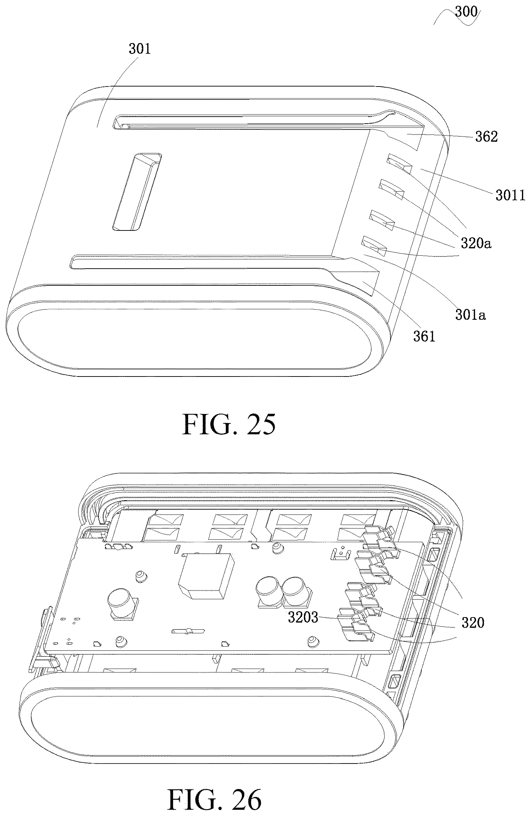

As shown in FIG. 25 and FIG. 26, a battery pack 300 is a kind of deformation of the battery pack 100, and for the convenience of expression, the same structure in the battery pack 300 and the battery pack 100 is indicated by a similar number and will not be repeated, and the different structures will be discussed in detail below.

In the width direction W, terminal accommodating holes 320a are formed between a first sliding slot 361 and a second sliding slot 362, and battery pack terminals 320 are at least partially accommodated in the terminal accommodating hole 320a. As shown in FIG. 25, the terminal accommodating hole 320a is located at a start end 301a of a top portion 301. Optionally, the terminal accommodating hole 320a is located at a top curved surface 3011.

Further, the battery pack terminal 320 mate with a corresponding terminal of the external device on both sides in the front and rear direction L. As shown in FIG. 26, a contact portion 3203 is provided as a pair of clamping pieces for clamping the corresponding terminal of the external device, and the clamping piece extends longitudinally in the front and rear direction L. The battery pack terminals 320 mate with the corresponding terminals of the external device on both sides in the front and rear direction L, which can more firmly clamp the terminals of the external device, making the electrical connection between the battery pack 100 and the external device more stable.

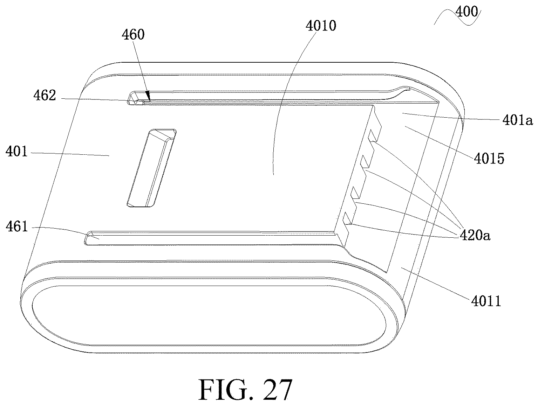

Referring to FIG. 27, a battery pack 400 is another kind of deformation of the battery pack 100, and for the convenience of expression, the same structure in the battery pack 400 and the battery pack 100 is indicated by a similar number and will not be repeated, and the different structures will be discussed in detail below.

In the width direction, terminal accommodating holes 420a are also formed between a first sliding slot 461 and a second sliding slot 462, and a tail end of the terminal accommodating hole 420a is substantially flush with one end of a top plane 4010. A top recess further includes a pit portion 4015 located at a start end 401a of a top portion 401, and the pit portion 4015 is in communication with a sliding slot 460. Optionally, the pit portion 4015 is located between the top plane 4010 and a top curved surface 4011.

Optionally, a battery pack terminal (not shown) in this embodiment is provided as a structure similar to that of the battery pack terminal 320, and will not be repeated herein.

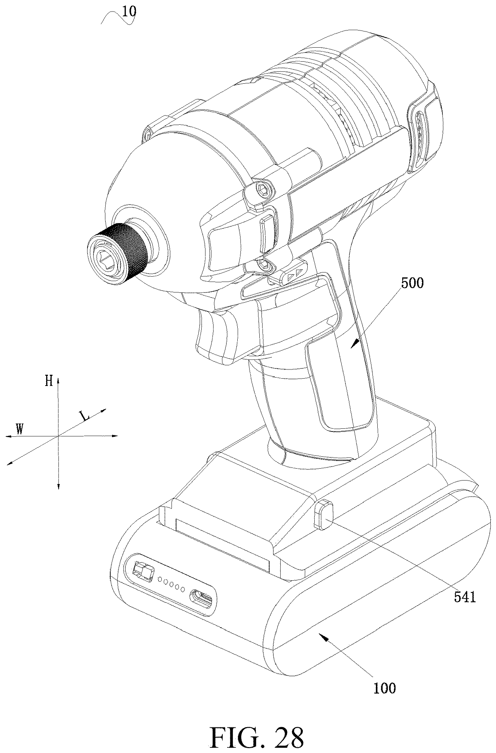

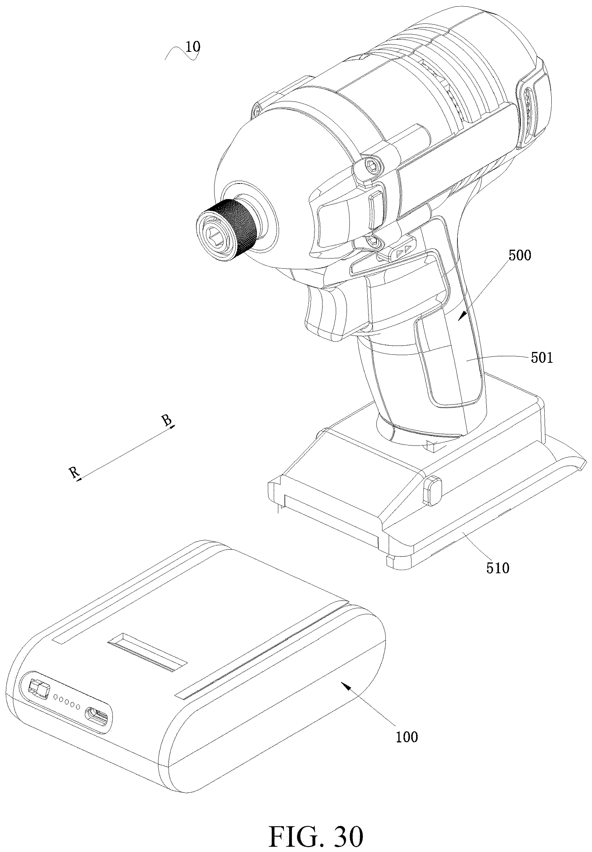

As shown in FIG. 28 to FIG. 34, an electrical combination 10 includes the battery pack 100 and an external device 500.

For details of the battery pack 100, see the foregoing section, and of course, the battery pack may also be provided as the battery pack 200, 300, or 400, which will not be repeated herein. The external device 500 may be provided as a power tool, or as a charger, or as other devices such as household appliances. Optionally, the external device 500 is provided as a power tool, specifically, the external device 500 is provided as an electric drill.

The external device 500 includes an external device interface 510, and the external device interface 510 is configured for being engaged to the battery pack 100 in the front and rear direction L, in other words, the front and rear direction L is provided as the engaging direction of the external device 500 and the battery pack 100. Specifically, when the battery pack 100 is engaged to the external device 500, the direction in which the battery pack 100 moves relative to the external device 500 is defined as the rear direction B, and the direction in which the external device 500 moves relative to the battery pack 100 is defined as the front direction R; and when removing the battery pack 100 from the external device 500, the direction in which the battery pack 100 moves relative to the external device 500 is defined as the front direction R, and the direction in which the external device 500 moves relative to the battery pack 100 is defined as the rear direction B.

The external device 500 further includes an external device housing 501, and as shown in FIG. 28 to FIG. 30, when the external device 500 is engaged to the battery pack 100, the external device interface 510 is at least partially located at the lower end of the external device housing 501 and the battery pack 100 is located below the external device 500.

The external device interface 510 includes an engaging surface 511 and a sliding rail 560 arranged on the engaging surface 511 and extending longitudinally in the front and rear direction, the sliding rail 560 includes a first sliding rail 561 and a second sliding rail 562, and in the width direction W, the first sliding rail 561 and the second sliding rail 562 are arranged on both sides of the external device interface 510, respectively. The first sliding rail 561 mates with the first sliding slot 161 and the second sliding rail 562 mates with the second sliding slot 162 for guiding the external device 500 to realize mechanical connection with the battery pack 100.

The sliding rail 560 has an opening, and the battery pack 100 slides in from the opening to be engaged to the external device 500. Specifically, the first sliding rail 561 has an opening 563 and the second sliding rail 562 has an opening 564, and optionally, the openings 563, 564 both face the inner side of the external device 500, in other words, in the width direction W, the engaging surface 511 is located between the first sliding rail 561 and the second sliding rail 562.

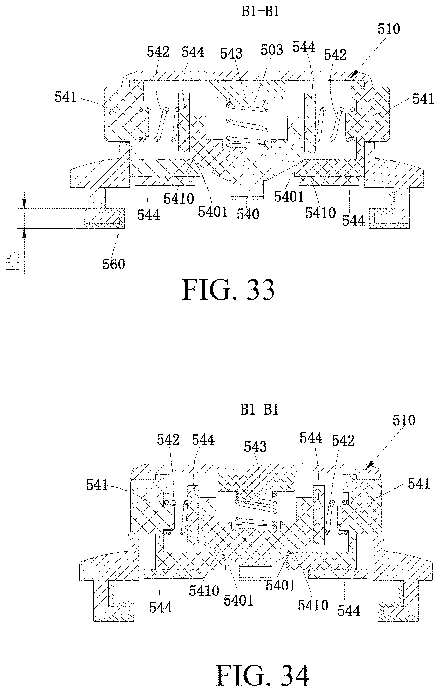

Optionally, as shown in FIG. 33, the size H5 of the sliding rail 560 in the height direction H is between 1.5 mm and 6 mm. When H5 is too large, it leads to an increase in the height of the external device interface 510, which in turn affects the size of the external device and is not conducive to miniaturization of the external device; and when H5 is too small, it will lead to unreliable engaging of the sliding rail 560 with the sliding slot 160, and then loosening occurs easily.

The external device interface 510 further includes a plurality of electrical device terminals 520 for being engaged to the battery pack terminals 120, thereby realizing electrical connection of the external device 500 with the battery pack 100. Optionally, the external device terminal 520 at least partially overlaps with a projection region of the sliding rail 560 in a plane perpendicular to the engaging direction. Optionally, the electrical device terminal 520 is provided into a flat plate shape, integrally molded with the sliding rail 560, which enables saving the space occupied by the external device 520 in the external device interface 510, thereby making the external device interface small in size and simple in structure.

The external device 500 further includes a circuit board (not shown), and the external device terminal 520 is electrically connected to the circuit board. Optionally, the external device interface 510 further includes a fixing plate 530 located between the first sliding rail 561 and the second sliding rail 562 in the width direction, the circuit board is accommodated in the space formed by the external device housing 501 and the fixing plate 530, and the engaging surface 511 further includes an outer surface 531 on the side of the fixing plate 530 away from the circuit board. Optionally, the outer surface of the fixing plate 230 has no other projections other than a locking member 540, and since the locking portion 140 of the battery pack 100 is provided to be recessed, this can prevent the fixing plate 530 from interfering with the top plane 1010 of the battery pack 100.

The locking member 540 protrudes out of the engaging surface 511, and by arranging the locking member 540 and an unlocking member 541 on the external device 500, the structure of the battery pack is made simple, and the size of the battery pack can be effectively reduced, so that it is convenient for the user to carry and use the battery pack.

The external device interface 510 further includes a circular arc portion 513 connected to the engaging surface 511, and when the battery pack 100 is engaged to the external device 500, the circular arc portion 513 is attached to the housing 110 of the battery pack 100, and furthermore, the circular arc portion 513 is attached to the start end 101a of the top portion 101, which can make the engagement between the battery pack 100 and the external device 500 more stable.

The external device interface 510 further includes a locking and releasing device configured for achieving locking and unlocking between the external device 500 and the battery pack 100. The locking and releasing device includes the locking member 540 capable of moving between a locked position and an unlocked position, and the unlocking member 541 driving the locking member 540 to move. When the locking member 540 is located at the locked position, the locking member 540 mates with the locking portion 140, and the external device 500 realizes locking with the battery pack 100. When the locking member 540 is located at the unlocked position, the locking member 540 disengages from the locking portion 140 and does not mate with the locking portion any more, and the external device 500 is unlocked from the battery pack 100.

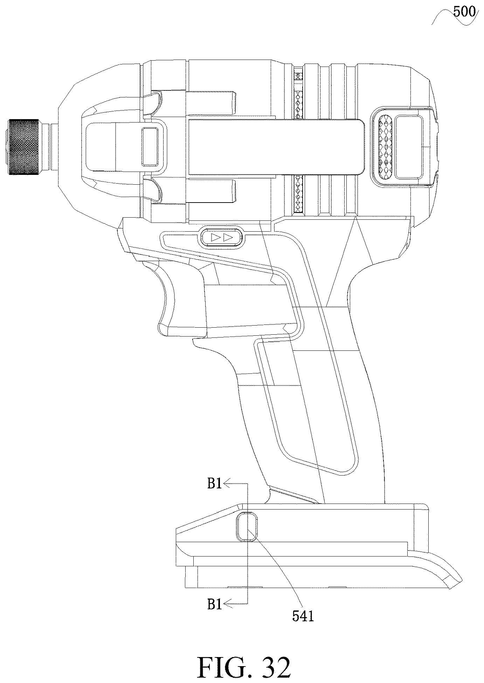

Further, referring to FIG. 32 to FIG. 34, the locking and releasing device further includes a first elastic portion 542 for resetting the unlocking member 541, a second elastic portion 543 for enabling the unlocking portion 541 to reset, and a support portion 544 arranged between the first elastic portion 542 and the locking portion 540. One end of the first elastic portion 542 is connected to the unlocking portion 541 in a sleeving mode and the other end of the first elastic portion abuts against the support portion 544; a raised portion 503 is arranged on the side of the external device housing 501 facing the second elastic portion 543, one end of the second elastic portion 543 is connected to the raised portion 503 in a sleeving mode, and the other end of the second elastic portion is pressed against the locking portion 540; and a first abutting portion 5410 is arranged at the end of the unlocking portion 541 close to the locking portion 540, and a second abutting portion 5401 is arranged at the end of the locking portion 540 close to the unlocking portion 541. When the unlocking portion 541 is not triggered, as shown in FIG. 33, the first elastic portion 542 and the second elastic portion 543 are both in a slack state, and the first abutting portion 5410 is pressed against the second abutting portion 5401. When the unlocking portion 541 is triggered, as shown in FIG. 34, the first elastic portion 542 is compressed, and the unlocking portion 541 drives the first abutting portion 5410 to move in the direction of the second abutting portion 5401, and squeezes the locking portion 540 through the support portion 544, enabling the locking portion 540 to move in the direction of compressing the second elastic portion 543, so that the second abutting portion 5401 disengages from the first abutting portion 5410. Optionally, the locking portion 540 is provided as a clamping hook, the number of the unlocking portion 541, the first elastic portion 542, and the second elastic portion 543 are all provided as two, the unlocking portions 541 are provided as buttons and are arranged on both sides of the external device interface 510 in the width direction W, respectively, the first elastic portion 542 and the second elastic portion 543 are provided as springs, and the support portion 544 is arranged on the fixing plate 530.

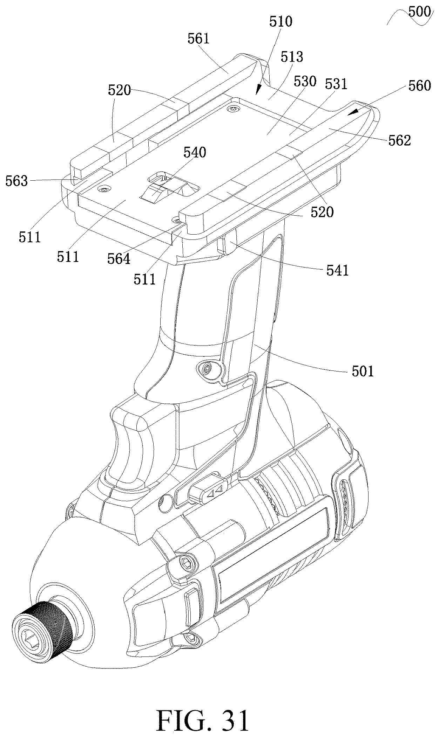

When the external device 500 is required to be engaged to the battery pack 100, the unlocking portion 541 is triggered first, enabling the locking portion 540 to move in a direction away from the external device 500, avoiding the locking portion 540 from interfering with the top 101 of the battery pack 100, and then, as shown in FIG. 31, the battery pack 100 is moved along the rear direction B in the front and rear direction L or the external device 500 is moved along the front direction R; and after the sliding slot 160 on the battery pack 100 and the sliding rail 560 on the external device 500 slide to be engaged in place, the unlocking portion 541 is loosened, and the first elastic portion 542 and the second elastic portion 543 return from the compressed state to the slack state, so that the locking portion 540 is moved in the direction of the external device 500, and the locking portion 540 mates with the locking member 140, so as to realize locking of the external device 500 with the battery pack 100. When it is needed to remove the battery pack 100 from the external device 500, it is only necessary to trigger the unlocking portion 541, so that the locking portion 540 is disengaged from the locking member 140, and then the battery pack 100 is moved along the front direction R in the front and rear direction L or the external device is moved along the rear direction B, so that the sliding rail 560 is disengaged from the sliding slot 160 and does not mate with the sliding slot any more, and then the battery pack 100 is completely disengaged from the external device 500.

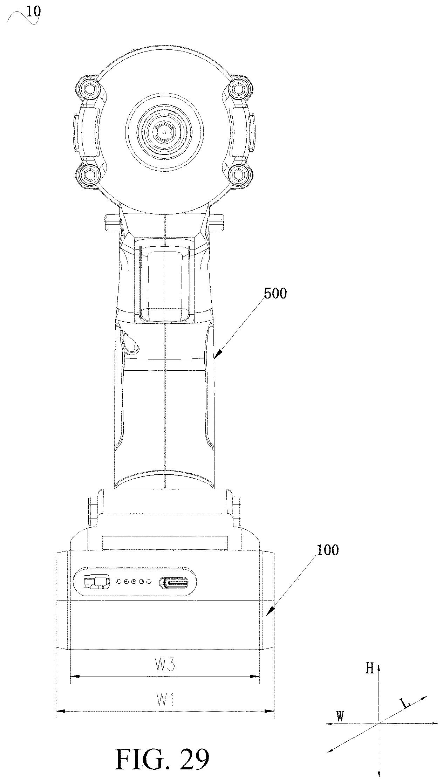

As shown in FIG. 29, when the battery pack 100 is engaged to the electrical device 500, in the width direction W, the size W3 of the external device interface 510 does not exceed the size W1 of the battery pack 100. Optionally, the ratio of W3 to W1 is equal to or greater than 0.31. Optionally, in the engaging direction L, the ratio of the size of the external device interface 510 to the size of the battery pack 100 is equal to or greater than 0.33. This can satisfy the engaging requirements between the battery pack 100 and the external device 500, and the battery pack 100 is firmly engaged to the external device 500 and not prone to falling off, and it can also make the battery pack 100 and the external device 500 small in size, which is convenient for the user to use and carry.

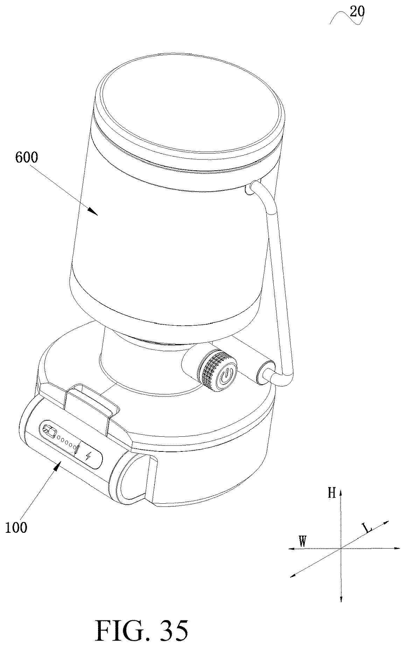

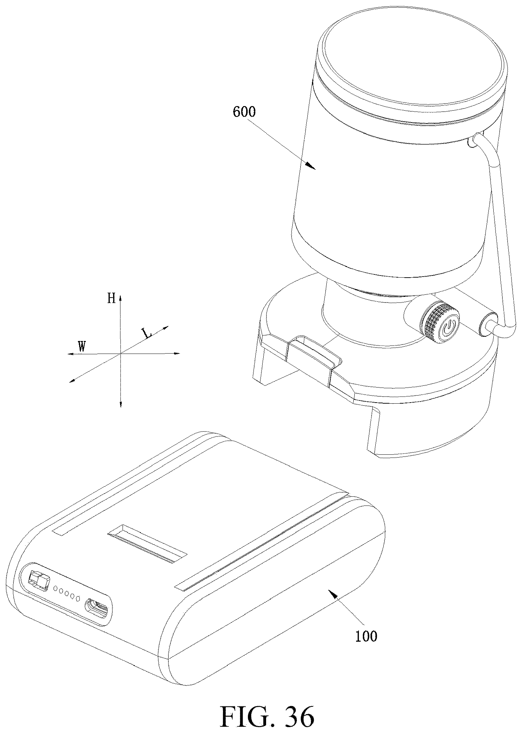

As shown in FIG. 35 to FIG. 37, an electrical combination 20 includes the battery pack 100 and an external device 600.

Of course, the battery pack may be provided as the battery pack 200, 300, or 400, which will not be repeated herein. Optionally, the external device 600 is provided as a household appliance, and specifically, the household appliance is a camping lamp.

The external device 600 includes an external device interface 610, and the external device interface 610 is configured for being engaged to the battery pack 100 in the engaging direction. The external device interface 610 is a kind of deformation of the external device interface 510, and for the convenience of expression, the same structure in the external device interface 610 and the external device interface 510 is indicated by a similar number and will not be repeated, and the different structures will be discussed in detail below.

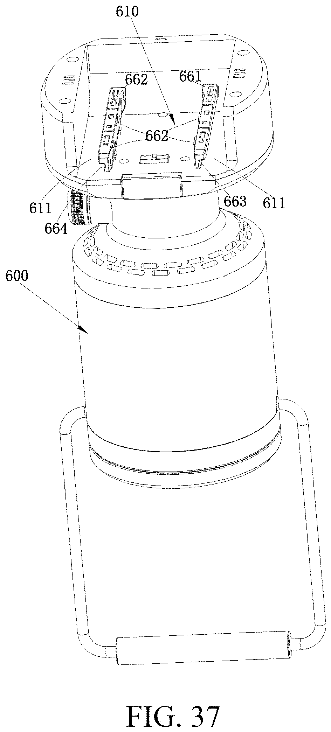

As shown in FIG. 37, a sliding rail 660 has an opening, and the battery pack 100 slides in from the opening to be engaged to the external device 600. Specifically, a first sliding rail 661 has an opening 663 and a second sliding rail 662 has an opening 664, with the openings 663, 664 both facing the outer side of the external device 600, in other words, in the width direction W, a engaging surface 611 is at least partially located on the side of the first sliding rail 661 facing the opening 663, and the engaging surface 611 is at least partially located on the side of the second sliding rail 662 facing the opening 664.

The external device interface 610 further includes a plurality of external device terminals 620 for being engaged to the battery pack terminals 120, thereby realizing electrical connection of the external device 600 with the battery pack 100. Optionally, the external device terminal 620 at least partially overlaps with a projection region of the sliding rail 660 in a plane perpendicular to the engaging direction, the external device terminal 620 is provided in the shape of a flat plate, and the external device terminal 620 is embedded in a groove formed in the sliding rail 660.

In an embodiment, an electrical combination includes a battery pack and a charger. When the battery pack is engaged to the charger, the charger is capable of providing electrical power to the battery pack.

The charger includes a charger interface, and the charger interface is configured for being engaged to the battery pack in the engaging direction. In this embodiment, the charger interface may be provided as the external device interface 510 or as the external device interface 610, which is not limited by the present disclosure.

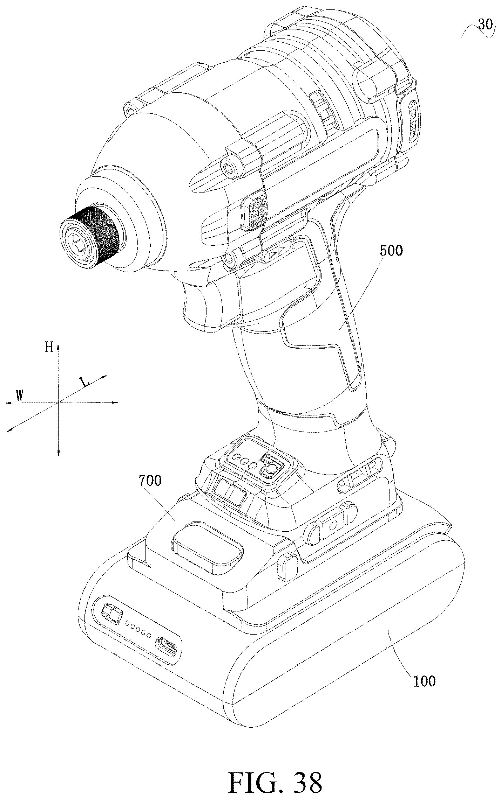

Referring to FIG. 38 to FIG. 52, an electrical combination 30 includes a power supply device 40 and an electrical device 500', the power supply device 40 includes the battery pack 100 and an adapter 700, the electrical device 500' and the battery pack 100 cannot be directly engaged, and when the battery pack 100 and the electrical device 500' are both engaged to the adapter 700, the battery pack 100 can be electrically connected to the electrical device 500'. The adapter 700 can enable the battery pack 100 with different interfaces to be engaged to the electrical device 500', making the battery pack 100 more widely applicable.

For details of the battery pack 100, see the foregoing section, and of course, the battery pack may also be provided as the battery pack 200, 300, or 400, which will not be repeated herein. The electrical device 500' may be provided as a power tool, or as a charger. Of course, the electrical device 500' may also be provided as other devices such as a household appliance. Optionally, the electrical device 500' is provided as a power tool, and specifically, the electrical device 500' is provided as an electric drill.

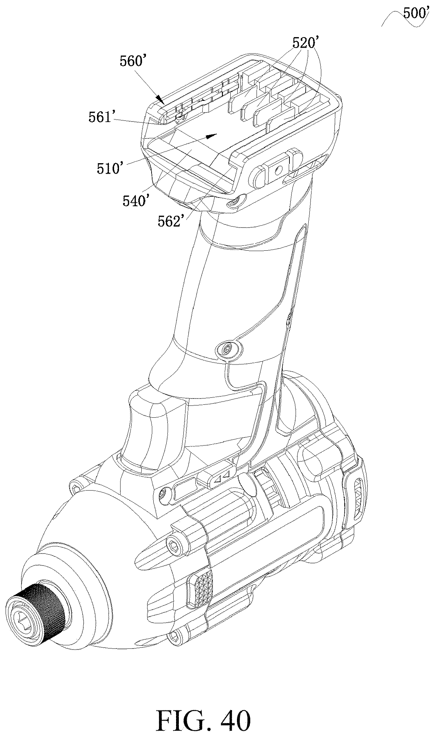

Referring to FIG. 40, the electrical device 500' includes an electrical device interface 510', and the electrical device interface 510' is configured for being engaged to the adapter 700 in the front and rear direction L, in other words, the front and rear direction L is provided as the engaging direction of the electrical device 500' with the adapter 700. The electrical device 500' and the external device 500 have substantially the same structure except for a different structure with respect to the interface.

The electrical device interface 510' includes an electrical device sliding slot 560' extending longitudinally in the front and rear direction L. The electrical device sliding slot 560' includes a first sliding slot 561' and a second sliding slot 562' arranged on both sides of the electrical device interface 510' in the width direction W, respectively, for guiding the adapter 700 to achieve mechanical connection with the electrical device 500'.

The electrical device interface 510' includes a locking member 540' for realizing locking and unlocking of the electrical device 500' with the adapter 700. Optionally, the locking member 540' is provided as a groove.

The electrical device interface 510' further includes a plurality of electrical device terminals 540' for being engaged to corresponding terminals of the adapter 700, thereby realizing electrical connection of the adapter 700 with the electrical device 500'. Optionally, the electrical device terminal 540' is arranged between the first sliding slot 561' and the second sliding slot 562', and the electrical device terminal 540' is provided in the shape of a flat plate.

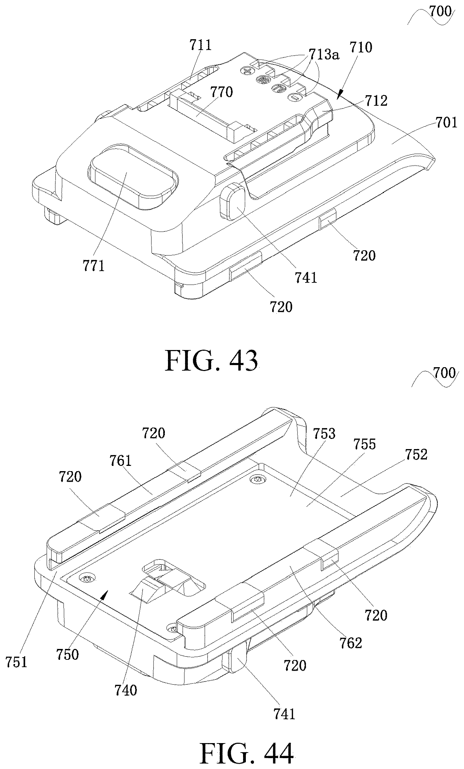

Referring to FIG. 43 to FIG. 46, the adapter 700 includes an adapter interface 710 and an external device interface 750, the adapter interface 710 is configured for being engaged to the electrical device 500' in the front and rear direction, and the external device interface 750 is configured for being engaged to the battery pack 100 in the front and rear direction, in other words, the engaging direction of the electrical device 500' with the adapter 700 and the engaging direction of the battery pack 100 with the adapter 700 are both provided as the front and rear direction.

The adapter interface 710 includes a first adapter sliding rail 711 and a second adapter sliding rail 712 extending longitudinally in the front and rear direction L. The first adapter sliding rail 711 mates with the first sliding slot 561' and the second adapter sliding rail 712 mates with the second sliding slot 562' for guiding the adapter 700 to realize mechanical connection with the electrical device 500'. Of course, the electrical device interface 510' can also be provided as a sliding rail type interface, and the adapter interface 710 can also be provided as a sliding slot type interface, as long as the electrical device interface 510' can be engaged to the adapter interface 710, which is not limited by the present application.

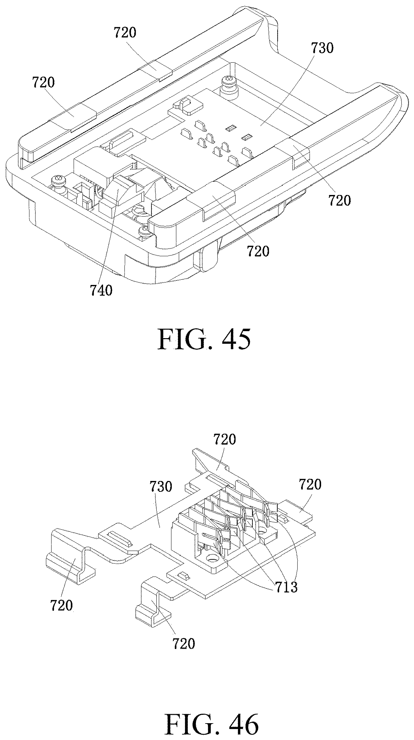

The adapter interface 710 further includes a plurality of adapter terminals 713, and the adapter terminal 713 is used for being engaged to the electrical device terminal 540', thereby realizing electrical connection of the adapter 700 with the electrical device 500'. Optionally, the adapter terminal 713 is arranged between the first adapter sliding rail 711 and the second adapter sliding rail 712, as shown in FIG. 46, the adapter terminal 713 is provided in a clamping shape as shown by the battery pack terminal 320, and the adapter terminal 713 is capable of clamping the electrical device terminals 520' in the shape of a flat plate from both sides of the engaging direction.

The external device interface 750 includes a third adapter sliding rail 761 and a fourth adapter sliding rail 762 extending longitudinally in the front and rear direction L, for guiding the adapter 700 to achieve mechanical connection with the battery pack 100. The external device interface 750 further includes a plurality of external device terminals 720, and the external device terminal 720 is configured for being engaged to the battery pack terminal 120, thereby realizing electrical connection of the adapter 700 with the battery pack 100. Optionally, the external device terminal 720, a third adapter sliding rail 761 and a fourth adapter sliding rail 762 overlap at least partially in a projection region in a plane perpendicular to the engaging direction, and the external device terminal 720 is provided into a sheet-like shape substantially identical to the external device terminal 520 as shown in FIG. 31.

In this embodiment, the structure of the external device interface 750 is substantially the same as the structure of the external device interface 510, and, of course, the external device interface 750 may also be provided as substantially the same as the external device interface 610, which will not be repeated herein.

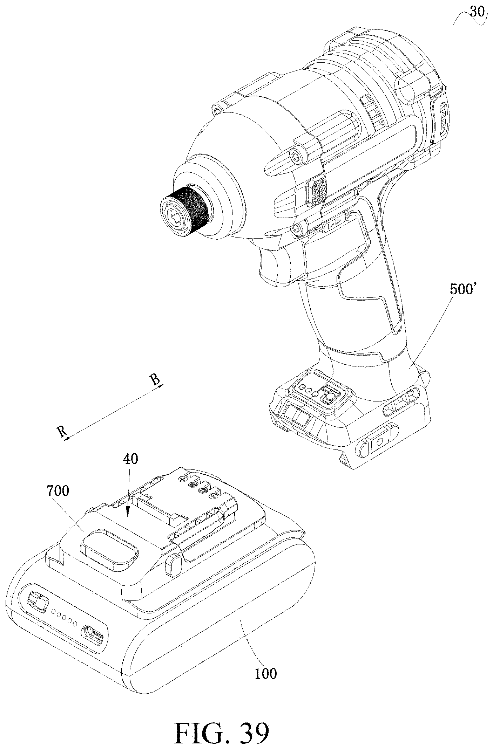

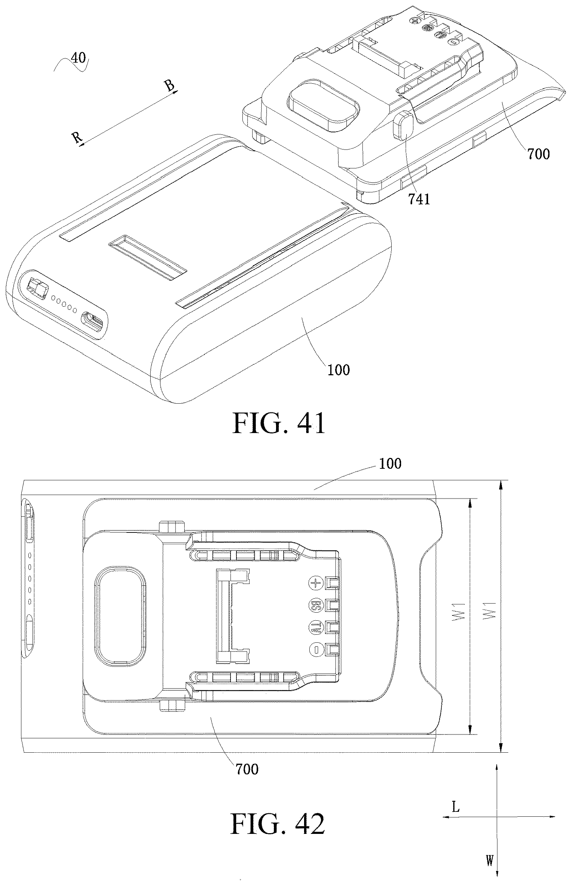

The adapter 700 includes an adapter housing 701, the adapter interface 710 is at least partially located at an upper end of the adapter housing 701, the adapter housing 701 includes a plurality of adapter terminal accommodating holes 713a at least partially accommodating the adapter terminals 713, each of the adapter terminals 713 is separately accommodated in each of the adapter terminal accommodating holes 713a, and in the width direction W, the terminal accommodating hole 713a is located between the first adapter sliding rail 711 and the second adapter sliding rail 712. As shown in FIG. 38 and FIG. 39, when the adapter 700 is engaged to the electrical device 500', the electrical device terminal 540' extends into the adapter terminal accommodating hole 713a and is engaged to the adapter terminal 713, the adapter 700 is located below the electrical device 500', and the external device interface 750 is at least partially located at the lower end of the adapter housing 701. When the adapter 700 is engaged to the battery pack 100, as shown in FIG. 41 and FIG. 42, the adapter 700 is located above the battery pack 100.

The external device interface 750 further includes a circular arc portion 752 connected to a engaging surface, and when the battery pack 100 is engaged to the adapter 700, the circular arc portion 752 is attached to the housing 110 of the battery pack 100. Specifically, the circular arc portion 752 is located at one end of the adapter housing 701, and when the battery pack 100 is engaged to the adapter 700, the circular arc portion 752 is attached to the start end 101a of the top 101 of the battery pack.

The adapter 700 includes an adapter circuit board 730, and both the first adapter terminal 713 and the second adapter terminal 720 are electrically connected to the adapter circuit board 730. As shown in FIG. 38, the second adapter interface 750 further includes a engaging surface 751, with the third adapter sliding rail 761 and the fourth adapter sliding rail 762 both extending downward from the engaging surface 751. Optionally, the second adapter interface 750 further includes a cover plate 753 located between a pair of second adapter sliding rails in the width direction W. The cover plate 753 is fixedly connected to the adapter housing 701, the adapter circuit board 730 is accommodated in the space formed by the adapter housing 701 and the cover plate 753, and the engaging surface 751 further includes an outer surface 755 on the side of the cover plate 753 away from the adapter circuit board 730.

The adapter 700 further includes a first locking and releasing device used for achieving locking and unlocking between the adapter 700 and the electrical device 500'. As shown in FIG. 43, FIG. 49 and FIG. 50, the first locking and releasing device includes a first locking member 770 mating with the locking member 540' of the electrical device 500', a first unlocking member 771 for controlling the first locking member 770 to move, and a first elastic member 772 enabling the first locking member 770 to reset, and the first elastic member 772 is pressed against the first unlocking member 771. Optionally, the first locking member 770 is provided as a clamping hook, the first unlocking member 771 is provided as a button, the first elastic member 772 is provided as a spring, and the first locking member 770 is integrally arranged with the first unlocking member 771.

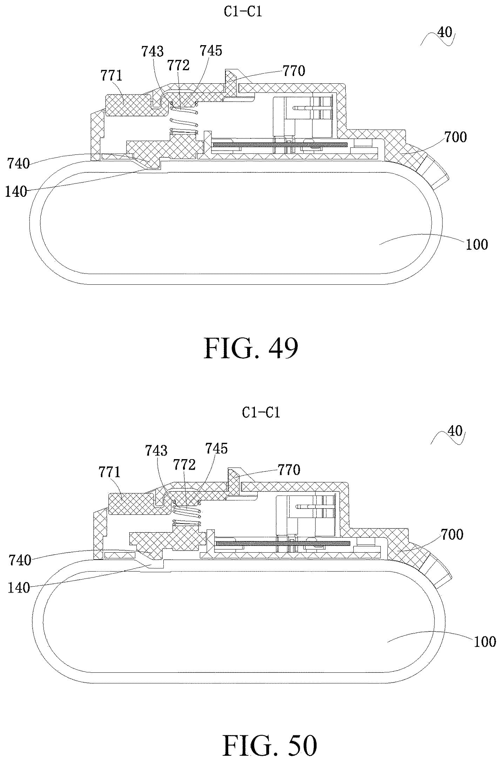

When the adapter 700 needs to be engaged to the electrical device 500', the first unlocking member 771 is triggered first, as shown in FIG. 39 and FIG. 50, and the first unlocking member 771 compresses the first elastic member 772 and enables the first locking member 770 to move in a direction away from the electrical device 500', avoiding the first locking member 770 from interfering with the electrical device 500'; then the adapter 700 is moved along the rear direction B in the front and rear direction or the electrical device 500' is moved along the front direction R; and then the first locking member 770 is loosened, as shown in FIG. 49, the first unlocking member 771 resets due to the action of the first elastic member 772 and drives the first locking member 770 to move in the direction of the electrical device 500', which enables the first locking member 770 to mate with the locking member 540' of the electrical device 500', thereby realizing the locking of the adapter 700 with the electrical device 500'. When it is needed to remove the electrical device 500' from the adapter 700, it is only necessary to trigger the first unlocking member 771, and the first unlocking member 771 drives the first locking member 770 to disengage from the locking member 540' of the electrical device 500', and then the adapter 700 is moved along the front direction R in the front and rear direction or the electrical device 500' is moved along the rear direction B until the electrical device 500' is completely disengaged from the adapter 700.

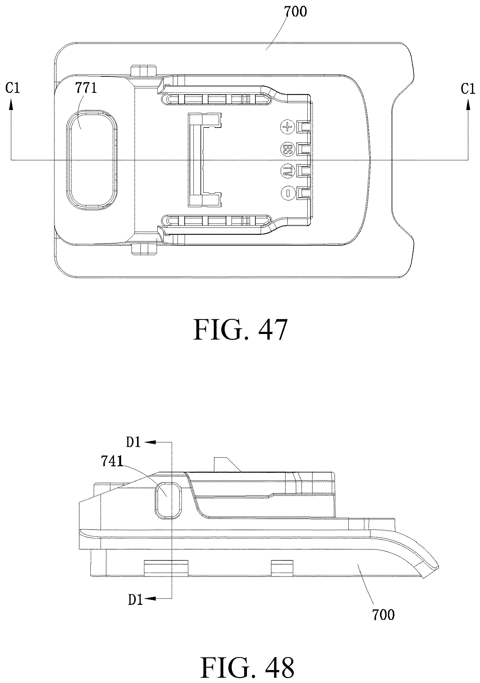

The adapter 700 further includes a second locking and releasing device configured for achieving locking and unlocking between the adapter 700 and the battery pack 100. As shown in FIG. 48, FIG. 51, and FIG. 52, the second locking and releasing device includes a second locking member 740 capable of moving between a locked position and an unlocked position, and a second unlocking member 741 driving the second locking member 740 to move, with the second locking member 740 protruding out of an engaging surface 753.

The second locking member 740 is capable of mating with the locking portion 140 on the battery pack 100, thereby enabling the adapter 700 to achieve locking with the battery pack 100. The second locking member 740 protrudes out of the cover plate 753, and optionally, other than the second locking member 740, there are no other projections on the outer surface of the cover plate 753, which can prevent the cover plate 753 from interfering with the top plane 1010 of the battery pack 100.

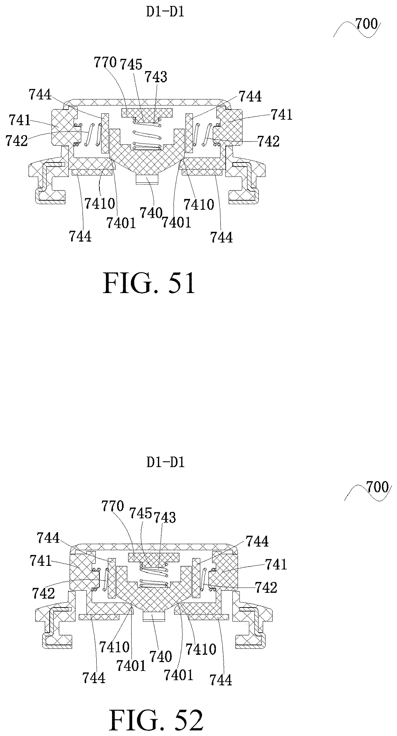

The second locking and releasing device further includes a second elastic member 742 for enabling the second locking member 740 to reset, a third elastic member 743 for enabling the second unlocking member 741 to reset, and a support member 744 arranged between the third elastic member 743 and the second locking member 740. One end of the second elastic member 742 is connected to the second unlocking member 741 in a sleeving mode, and the other end of the second elastic member is pressed against the support member 744; one end of the third elastic member 743 is connected to a projection member 745 below the adapter housing 701 in a sleeving mode, and the other end of the third elastic member is pressed against the second locking member 740; and the end of the second unlocking member 741 close to the second locking member 740 is provided with a first abutting member 7410, and the end of the second locking member 740 close to the second unlocking member 741 is provided with a second abutting member 7401. When the second unlocking member 741 is not triggered, as shown in FIG. 51, the second elastic member 742 and the third elastic member 743 are both in a slack state, and the first abutting member 7410 is pressed against the second abutting member 7401. When the second unlocking member 741 is triggered, as shown in FIG. 52, the second elastic member 742 is compressed, and the second unlocking member 741 drives the first abutting member 7410 to move in the direction of the second abutting member 7401, and squeezes the second locking member 740 through the support member 744, enabling the second locking member 740 to move in the direction of compressing the third elastic member 743, so that the second abutting member 7401 disengages from the first abutting member 7410. Optionally, the second unlocking member 741, the second elastic member 742, and the support member 744 are all provided as a pair, the second unlocking members 741 are provided as buttons and are arranged on both sides of the adapter interface 710, respectively, the third elastic member 743 and the first elastic member 772 are arranged as the same part, the projection member 745 is arranged on the first unlocking member 771, and the support member 744 is arranged on the cover plate 753.

When the adapter 700 needs to be engaged to the battery pack 100, as shown in FIG. 41, FIG. 49, and FIG. 52, the second unlocking member 741 is triggered first, enabling the second locking member 740 to move in the direction away from the battery pack 100, and avoiding the second locking member 740 from interfering with the top plane 1010 of the battery pack 100; and then the battery pack 100 is moved along the rear direction B in the front and rear direction or the adapter 700 is moved along the front direction R, and after the first sliding slot 161 and the second sliding slot 162 on the battery pack 100 slide to be mated in place with the third adapter sliding rail 761 and the fourth adapter sliding rail 762, respectively, then the second unlocking member 741 is loosened, the second elastic member 742 and the third elastic member 743 return from the compressed state to the slack state, so that the second locking member 740 moves in the direction of the battery pack 100, and the second locking member 740 mates with the locking groove 140 on the battery pack, thereby realizing the locking of the adapter 700 with the battery pack 100. When it is needed to remove the battery pack 100 from the adapter 700, it is only necessary to trigger the second unlocking member 741, so that the second locking member 740 is disengaged from the locking portion 140, and then the battery pack 100 is moved along the front direction R in the front and rear direction or the adapter 700 is moved along the rear direction B, so that the first sliding slot 161 and the second sliding slot 162 on the battery pack 100 are respectively disengaged from the third adapter sliding rail 761 and the fourth adapter sliding rail 762 and do not mate with the third adapter sliding rail and the fourth adapter sliding rail any more, and then the battery pack 100 can be disengaged from the adapter 700.

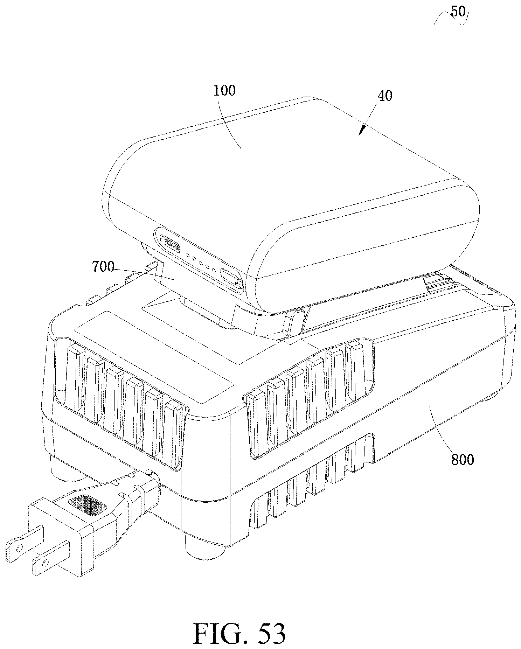

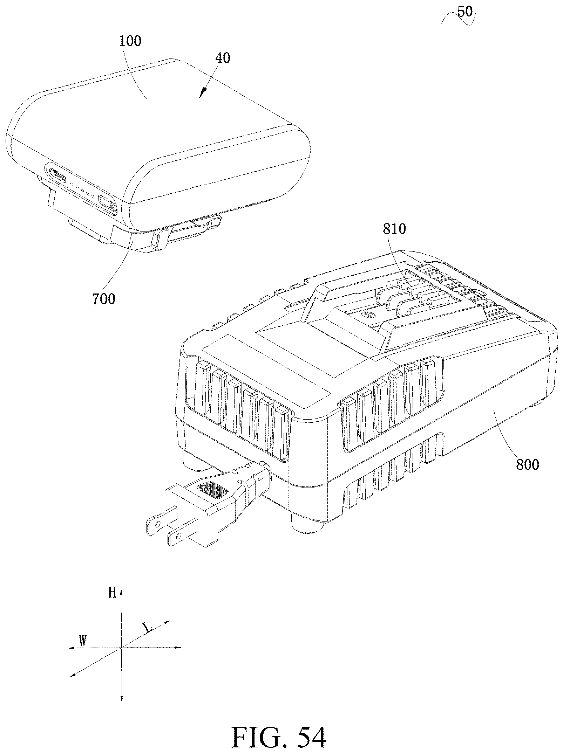

As shown in FIG. 53 to FIG. 55, an electrical combination 50 includes a power supply device 40 and an electrical device 800.

For details of the battery pack 100 and the power supply device 40, see the foregoing section, and of course, the battery pack may also be provided as the battery pack 200, 300, or 400, which will not be repeated herein. Optionally, the electrical device 800 is provided as a charger, and the electrical device 800 is capable of charging the battery pack 100 when the electrical device 800 is connected to a mains supply and the electrical device 800 is engaged to the power supply device 40.

The electrical device 800 includes an electrical device interface 810, and the electrical device interface 810 is configured for being engaged to the adapter interface 710 in the front and rear direction. In this embodiment, the structure of the electrical device interface 810 is substantially the same as the structure of the electrical device interface 510', and will not be repeated herein.

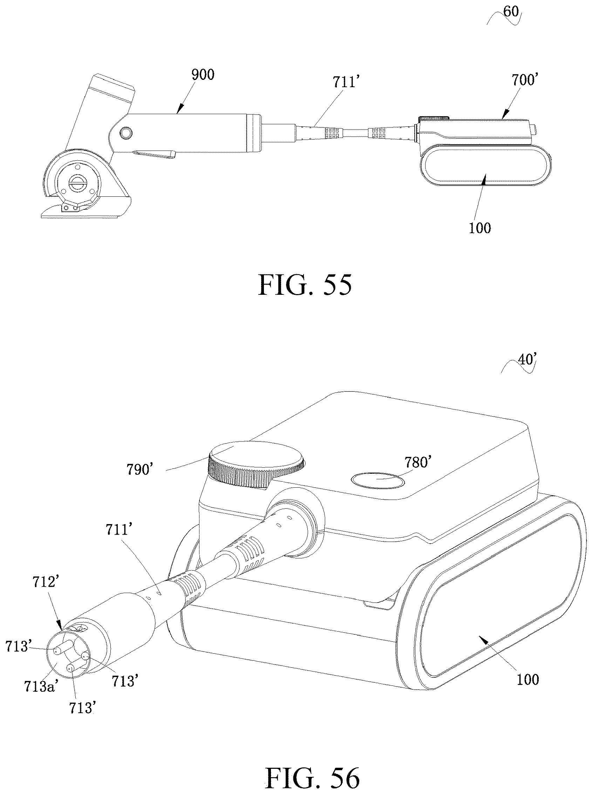

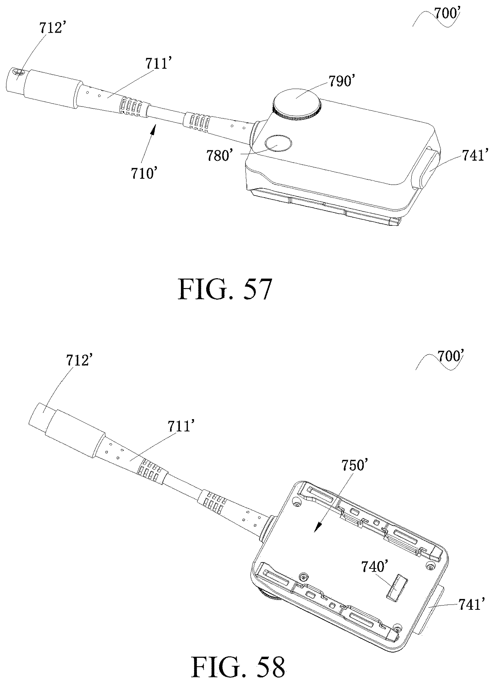

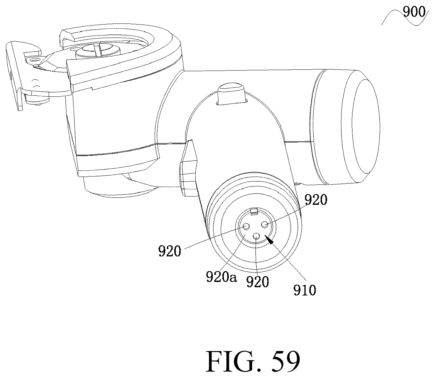

As shown in FIG. 55 to FIG. 59, an electrical combination 60 includes a power supply device 40' and an electrical device 900, and the power supply device 40' includes the battery pack 100 and an adapter 700'.

For details of the battery pack 100, see the foregoing section, and of course, the battery pack may also be provided as the battery pack 200, 300, or 400, which will not be repeated herein. The electrical device 900 and the battery pack 100 cannot be directly engaged, and when the battery pack 100 and the electrical device 900 are both engaged to the adapter 700', the battery pack 100 can be electrically connected to the electrical device 900. Optionally, the electrical device 900 is provided as a household appliance. Specifically, the electrical device 900 is provided as electric scissors. Of course, the electrical device 900 may also be provided as other household appliances or power tools. The adapter 700' can enable the battery pack 100 with different interfaces to be engaged to the electrical device 900, making the battery pack 100 more widely applicable.

The electrical device 900 includes an electrical device interface 910, and the electrical device interface 910 is configured for being engaged to the adapter 700'. The electrical device interface 910 includes a plurality of electrical device terminals 920 for being engaged to corresponding terminals of the adapter 700', thereby realizing electrical connection of the electrical device 900 with the adapter 700'.

The electrical device interface 910 further includes terminal accommodating holes 920a for accommodating the electrical device terminals 920. Optionally, the electrical device terminals 920 are provided as j acks, evenly distributed in the terminal accommodating holes 920a.

The adapter 700' also includes an adapter interface 710' and an external device interface 750', the adapter interface 710' is configured for being engaged to the electrical device 900 in the front and rear direction, and the external device interface 750' is configured for being engaged to the battery pack 100 in the engaging direction. The structure of the external device interface 750' is substantially the same as the structure of the external device interface 750, and will not be repeated herein.

The adapter interface 710' includes a cable 711' and a connector 712', one end of the connector 712' is connected to the cable 711', and the other end of the connector 712' is configured for connecting the electrical device 900. Optionally, one end of the connector 712' is fixedly connected to the cable 711', and the other end of the connector 712' is detachably connected to the electrical device 900.

The connector 712' includes a plurality of adapter terminals 713', and the adapter terminal 713' is configured for being engaged to the electrical device terminal 920, thereby realizing electrical connection of the adapter 700' with the electrical device 900. The connector 712' further includes terminal accommodating holes 713a' for accommodating the adapter terminals 713'. Optionally, the adapter terminals 713' are provided as pins evenly distributed in the terminal accommodating holes 713a'.

The adapter 700' further includes a locking and releasing device for mating with the locking portion 140 on the battery pack 100 to achieve locking and unlocking of the adapter 700' with the battery pack 100. The locking and releasing device includes a locking member 740' mating with the locking portion 140 on the battery pack 100 and an unlocking member 74 1' driving the locking member 740' to move, and the structure of the locking and releasing device of the adapter 700' is substantially the same as the structure of the second locking and releasing device of the adapter 700, and will not be repeated herein.

The adapter 700' further includes an operating unit, the operating unit includes a switch 780', and the switch 780' is configured for controlling the transmission of power from the battery pack 100 to the electrical device 900, thereby controlling a motor (not shown) arranged within the electrical device 900 to be turned on or off. When it is needed to start the electrical device 900, the user only needs to trigger the switch 780' and then power flows from the battery pack 100 to the motor through a control device (not shown) arranged within the electrical device 900. Optionally, the switch 780' is provided as a button located on the housing of the adapter 700'.

The operating unit further includes an adjustment switch 790', and the adjustment switch 790' is configured for controlling the operating state of the electrical device 900. When the user triggers the adjustment switch 790', the control device (not shown) arranged within the electrical device 900 generates an adjustment signal for adjusting an operating parameter of the electrical device 900 and sends the adjustment signal to the electrical device 900, or the electrical device 900 actively acquires the adjustment signal so that the electrical device 900 can adjust the operating parameter according to the adjustment signal. The adjustment signal may be set as a speed adjustment signal, a temperature adjustment signal, or other signals for adjustment. Optionally, the adjustment switch 790' is provided as a speed control knob located on the housing of the adapter 700', so that when the user rotates the adjustment switch 790' to different gears, the motor within the electrical device 900 can output different rotation speeds.

In other embodiments, the switch 780' and the adjustment switch 790' can also be integrated for simplifying the operating interface of the adapter 700'.

In an embodiment, an electrical combination includes an external device and an adapter.

The external device may be provided as a power tool, or as a charger, or as other devices such as household appliances. For example, the external device may be provided as the external device 500, and may also be provided as the external device 600, and so on.

The adapter includes an adapter interface for connecting with the external device, and optionally, the adapter interface is provided in substantially the same structure as the battery pack interface 105, and will not be repeated herein.

Optionally, the adapter further includes a 3C interface, and when the external device is connected to the adapter, the external device can be connected to an external power supply, such as a portable charger, through the 3C interface so that the external power supply supplies power to the external device. Optionally, the 3C interface is provided as a Type-C interface.

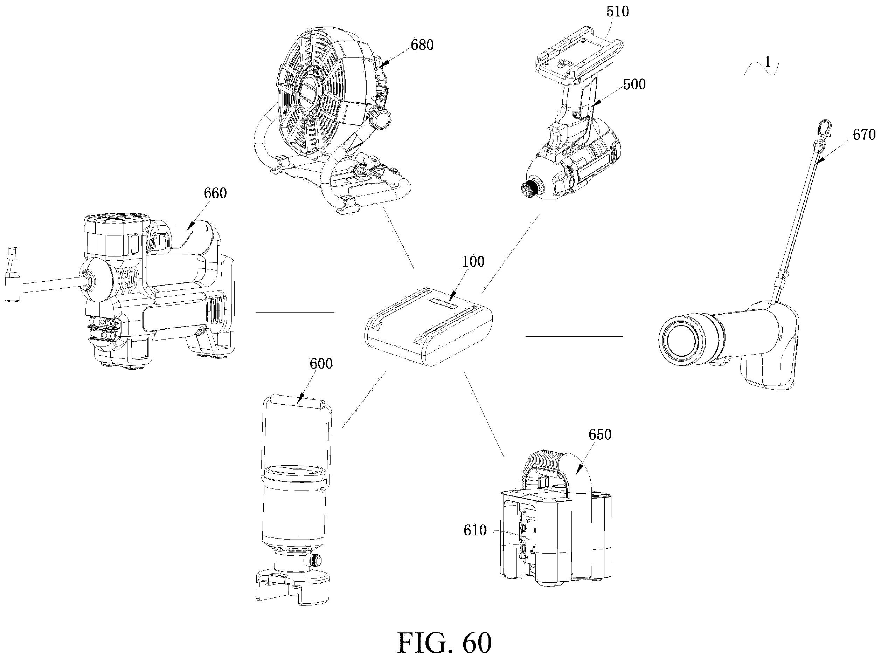

As shown in FIG. 60, an electrical system 1 includes the battery pack 100 and various external devices capable of being engaged to the battery pack 100.

For details of the battery pack 100, see the foregoing section, and of course, the battery pack may also be provided as the battery pack 200, 300, or 400, which will not be repeated herein. The various external devices include a common external device interface, and the common external device interface may be provided as the external device interface 510 or as the external device interface 610. The various external devices may include power tools, such as an electric drill 500; the various external devices may also be provided as household appliances, such as a camping lamp 600, a car vacuum cleaner 650, an inflatable pump 660, a flashlight 670 and an electric fan 680; and the various external devices may also be provided as a charger (not shown in the figure).

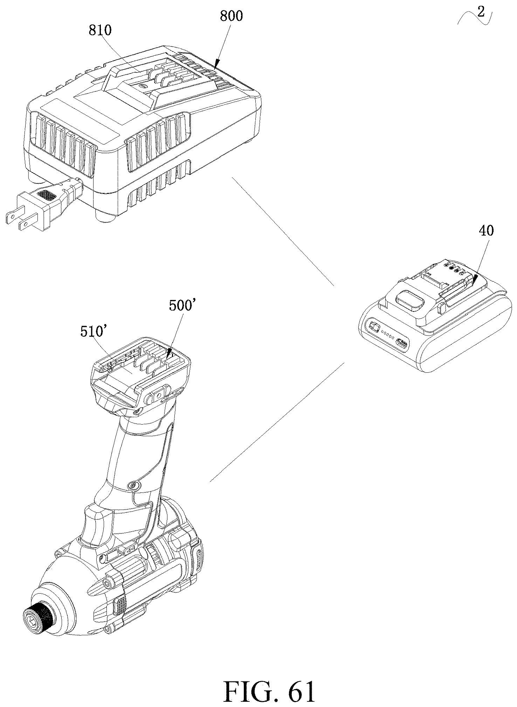

Referring to FIG. 61, an electrical system 2 includes various electrical devices and the power supply device 40 capable of being engaged to the electrical device. For details of the power supply device 40, see the foregoing section, which will not be repeated herein.

The various electrical devices may include power tools, such as the electric drill 500; the various electrical devices may also be provided as a charger or as a household appliance (not shown in the figure). The various electrical devices include a common electrical device interface, and in this embodiment, the common electrical device interface may be provided as the electrical device interface 510', and may also be provided as the electrical device interface 810.

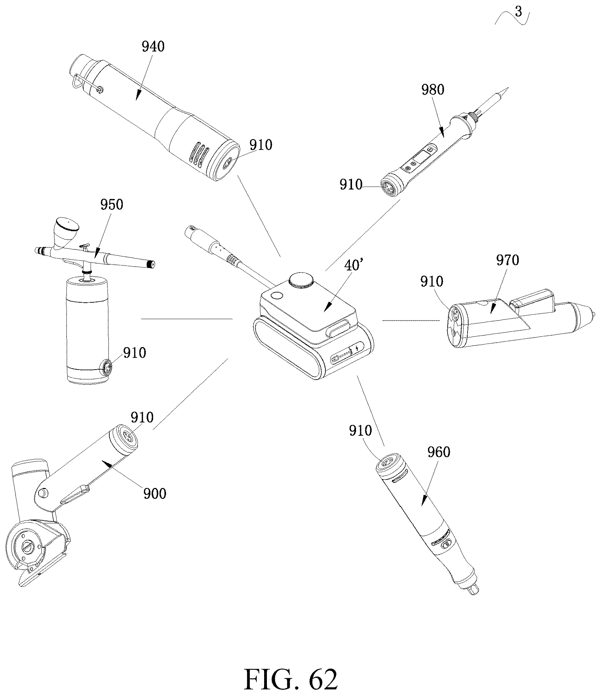

As shown in FIG. 62, an electrical system 3 includes various electrical devices and an adapter 40' capable of being engaged to the electrical device. For details of the adapter 40', see the foregoing section, which will not be repeated herein.

The various electrical devices may include power tools such as a hot air gun 940, a spray gun 950, electric scissors 900, a small straight grinder 960, a glue gun 970 and an electric soldering iron 980, as shown in the figure; and the various electrical devices can also be provided as various household appliances, such as pet scissors (not shown in the figure). The various electrical devices include a common electrical device interface, and in this embodiment, the common electrical device interface is provided as the electrical device interface 910.

The technical features of the above embodiments can be combined arbitrarily. In order to make the description concise, not all possible combinations of the technical features in the above embodiments are described. However, all the combinations of the technical features should be considered as falling within the scope described in this specification provided that they do not conflict with each other.

The above embodiments only describe several implementations of the present disclosure, and the description is specific and detailed, but cannot therefore be understood as a limitation to the patent scope of the present disclosure. It should be noted that, a person of ordinary skill in the art may further make several variations and improvements without departing from the concept of the present disclosure, and these variations and improvements all fall within the protection scope of the present disclosure.

## Claims

1. A battery pack, being configured for engaging to an external device, comprising:
a housing, having a top portion and a bottom portion arranged opposite to each other and a first side portion and a second side portion arranged opposite to each other;
a plurality of cells electrically connected to each other, being accommodated in the housing;
a sliding slot, comprising a first sliding slot and a second sliding slot, configured for guiding the battery pack to achieve mechanical connection with the external device; and
a locking portion, configured for achieving locking between the battery pack and the external device,
wherein the top portion comprises a top plane and a top recess under the top plane in the height direction, the top recess comprises the sliding slot and the locking portion, and the sliding slot is recessed downward from the top plane in the height direction, and the first side portion, the second side portion, and the sliding slot all extend in the longitudinal direction of the battery pack.

2. The battery pack according to claim 1, wherein the top plane comprises a first planar part, a second planar part, and a third planar part; the first planar part is located between the first sliding slot and the second sliding slot in the width direction; the second planar part is located between the first side portion and the first sliding slot in the width direction; the third planar part is located between the second side portion and the second sliding slot in the width direction; and the first planar part, the second planar part and the third planar part have substantially the same sizes in the longitudinal extension direction of the battery pack.

3. The battery pack according to claim 1, wherein the housing has a first end and a second end opposite to each other in the longitudinal extension direction of the battery pack, and the shapes and sizes of the outer contours of the first end and the second end are substantially the same.

4. The battery pack according to claim 1, wherein the first side portion and the second side portion have substantially the same shape and size of the outer contour at both ends of the battery pack in the longitudinal extension direction.

5. The battery pack according to claim 1, wherein the battery pack further comprises a plurality of battery pack terminals, and the battery pack terminal is configured for being electrically connected to a corresponding terminal of the external device; and the top recess further comprises terminal accommodating hole for at least partially accommodating the battery pack terminal, and the terminal accommodating hole is arranged in the sliding slot.

6. The battery pack according to claim 5, wherein the first sliding slot and the second sliding slot both comprise a pair of sidewalls extending in the longitudinal extension direction of the battery pack and a bottom wall arranged between the pair of sidewalls, and the terminal accommodating hole is arranged in the sidewall and/or the bottom wall.

7. The battery pack according to claim 1, wherein the battery pack further comprises a plurality of battery pack terminals, and the battery pack terminal is configured for being electrically connected to a corresponding terminal of the external device; and the top recess further comprises terminal accommodating hole for at least accommodating the battery pack terminal, and the terminal accommodating hole is arranged between the first sliding slot and the second sliding slot.

8. The battery pack according to claim 1, wherein the top portion further comprises top curved surfaces respectively connected to both ends of the top plane, and the top curved surface is connected to the bottom portion.

9. The battery pack according to claim 8, wherein the sliding slot at least partially extends to the top curved surface.

10. The battery pack according to claim 8, wherein the battery pack further comprises a power quantity display portion for displaying the power quantity of the battery pack, and the power quantity display portion is located on the top curved surface.

11. The battery pack according to claim 8, wherein the battery pack further comprises a 3C interface for charging a 3C electronic device, and the 3C interface is located on the top curved surface.

12. The battery pack according to claim 8, wherein the bottom portion comprises bottom curved surfaces respectively connected to both ends of the top curved surface, and the top curved surface is connected to the bottom curved surface in order to connect the top portion and the bottom portion.

13. The battery pack according to claim 1, wherein the battery pack further comprises projecting portion for non-slip, the bottom portion comprises a bottom plane, and the projecting portion protrudes out of the bottom plane.

14. The battery pack according to claim 1, wherein in the width direction, the locking portion is located between the first sliding slot and the second sliding slot.

15. The battery pack according to claim 1, wherein the locking portion is at least partially accommodated within the sliding slot.

16. The battery pack according to claim 1, wherein the top portion and the bottom portion are connected by ultrasonic welding or laser welding.

17. The battery pack according to claim 1, wherein the ratio of the area of the top recess to the area of a projection region of the top portion in a plane parallel to the top plane is between 0.8% and 43%.

18. The battery pack according to claim 1, wherein the ratio of the area of the sliding slot to the area of the projection region of the top portion in a plane parallel to the top plane is between 0.7% and 50%.

19. The battery pack according to claim 1, wherein in the width direction, the ratio of the minimum distance between the first sliding slot and the second sliding slot to the size of the battery pack is equal to or greater than 0.23.

20. The battery pack according to claim 1, wherein in the width direction, the ratio of the minimum value of the size of the sliding slot to the size of the battery pack is equal to or greater than 0.01.

21. The battery pack according to claim 1, wherein in the longitudinal extension direction of the battery pack, the ratio of the size of the sliding slot to the size of the battery pack is equal to or greater than 0.24.

22. The battery pack according to claim 1, wherein the top portion has a start end and a tail end opposite to each other in the longitudinal extension direction of the battery pack, and when the battery pack is engaged to the external device, the start end contacts the external device prior to the tail end; both the first sliding slot and the second sliding slot comprise a pair of sidewalls extending in the longitudinal extension direction of the battery pack and arranged opposite to each other, and a bottom wall arranged between the pair of sidewalls; and in the width direction, the distance between the pair of sidewalls on the side of the sliding slot close to the start end is greater than the distance between the pair of sidewalls on the side of the sliding slot close to the tail end.

23. The battery pack according to claim 1, wherein the battery pack further comprises a circuit board, and in the width direction, the circuit board is located between the first sliding slot and the second sliding slot.

24. The battery pack according to claim 1, wherein the battery pack further comprises a circuit board, and the circuit board overlaps at least partially with a projection region of the sliding slot in a plane perpendicular to the width direction.

25. An external device, comprising an external device interface, the external device interface being configured for being engaged to the battery pack according to any one of claims 1-24, the external device interface comprising an engaging surface and a first sliding rail and a second sliding rail arranged on the engaging surface and extending in an engaging direction, the first sliding rail mating with the first sliding slot and the second sliding rail mating with the second sliding slot to guide the external device to be engaged to the battery pack, the external device interface further comprising a locking and releasing device, the locking and releasing device being configured for locking and unlocking between the battery pack and the external device, the locking and releasing device comprising a locking member capable of moving between a locked position and an unlocked position and an unlocking member driving the locking member to move, wherein the locking member protrudes out of the engaging surface.

26. The external device according to claim 25, wherein the sliding rail has an opening, the battery pack slides in from the opening to be engaged to the external device, and the opening faces the outer side of the external device.

27. The external device according to claim 25, wherein the size of the sliding rail in the height direction is between 1.5 mm and 6 mm.

28. The external device according to claim 25, wherein the external device interface further comprises an arc portion connected to the engaging surface, and when the battery pack is engaged to the external device, the arc portion is attached to the housing of the battery pack.

29. The external device according to any one of claims 25-28, wherein the external device is provided as an electrical device or an adapter, and the electrical device is provided as any one of a power tool, a household appliance, and a charger.

30. An electrical combination, wherein the electrical combination comprises the battery pack according to any one of claims 1-24 and the external device according to any one of claim 29, or the electrical combination comprises the battery pack according to any one of claims 1-24 and the electrical device and the adapter according to claim 29.

31. An electrical combination, wherein the electrical combination comprises an electrical device, the battery pack according to any one of claims 1-24 and the external device according to claim 29, the external device is provided as an adapter, the electrical device comprises an electrical device interface, the electrical device interface is not capable of adapting to the battery pack according to any one of claims 1-24, and the electrical device is provided as any one of a power tool, a household appliance, and a charger.

32. The electrical combination according to claim 30, wherein in the width direction, the ratio of the size of the external device interface to the size of the battery pack is equal to or greater than 0.31.

33. The electrical combination according to claim 30, wherein in the engaging direction, the ratio of the size of the external device interface to the size of the battery pack is equal to or greater than 0.33.

34. A battery pack, being capable of being engaged to an external device, comprising:
a housing, accommodating a plurality of cells electrically connected to each other;
a battery pack interface, which is configured for being engaged to the external device to enable the battery pack to supply power to the external device or enable the external device to charge the battery pack, the battery pack interface comprising a sliding slot and a plurality of battery pack terminals, the sliding slot being configured for guiding the battery pack to achieve mechanical connection with the external device, and the battery pack terminal being configured for being electrically connected to a corresponding terminal of the external device; and
a circuit board, which comprises a substrate and a plurality of components connected to the substrate, the battery pack terminal being connected to the substrate,
wherein the maximum size of the battery pack in the height direction is defined as the height H1 of the battery pack, the number of layers of cells 170 in the height direction is defined as N, the diameter of each cell is defined as D, and the height H1 of the battery pack is configured as N*D+6<H1 <N*D+26.

35. The battery pack according to claim 34, wherein the maximum size of the battery pack in the width direction is defined as the width W1 of the battery pack, and the ratio of the height H1 of the battery pack to the width W1 of the battery pack is configured as N*D+6/80<H1/W1<N*D+26/72.

36. The battery pack according to claim 34, wherein the ratio of the height H1 of the battery pack to the surface area of the battery pack is less than 0.02.

37. The battery pack according to claim 34, wherein the ratio of the maximum size of the sliding slot in the height direction to the height H1 of the battery pack is greater than 0.02.

38. The battery pack according to claim 34, wherein the circuit board overlaps at least partially with the projection region of the sliding slot in a plane perpendicular to the width direction.

39. The battery pack according to claim 34, wherein the battery pack terminal overlaps at least partially with the projection region of the sliding slot in a plane perpendicular to the width direction.

40. The battery pack according to claim 34, wherein the maximum size of the circuit board in the height direction is defined as the height H2 of the circuit board, and the ratio of the height H2 of the circuit board to the height H1 of the battery pack is not greater than 0.4.

41. The battery pack according to claim 39, wherein the height H2 of the circuit board is between 1-10 mm.

42. The battery pack according to claim 34, wherein in the engaging direction, the ratio of the size of the circuit board to the size of the battery pack is not less than 0.5.

43. The battery pack according to claim 34, wherein the battery pack further comprises a 3C interface, the 3C interface is configured for being engaged to a 3C electronic device to enable the battery pack to supply power to the 3C electronic device, and the 3C interface is also capable of being connected to an external power supply for supplying power to the battery pack, the rated power provided by the 3C interface for supplying power to the 3C electronic device is defined as the output power, the maximum size of the circuit board in the height direction is defined as the height of the circuit board, and the ratio of the output power to the height of the circuit board is greater than 2 w/mm.

44. The battery pack according to claim 43, wherein the 3C interface is provided as a Type-C interface.

45. The battery pack according to claim 43, wherein in the height direction, the maximum size of the battery pack terminal is less than or equal to the maximum size of the plurality of components.

46. The battery pack according to claim 43, wherein the substrate comprises a first face away from the cell and a second face close to the cell, and the components comprise a first set of components arranged on the first face and a second set of components arranged on the second face.

47. The battery pack according to claim 46, wherein in the height direction, the distance between the first face and the highest point of the first set of components is between 0-10 mm.

48. The battery pack according to claim 46, wherein in the height direction, the distance between the second face and the lowest point of the second set of components is between 0-5 mm.
